# EUROPEAN PATENT APPLICATION

(11) **EP 4 707 733 A1**
(43) Date of publication of application: **11.03.2026**
(21) Application number: 24819383.1
(22) Date of filing: 06.06.2024
(51) Int. Cl.: G01B 21/16, F16L 15/00, G01B 21/20

(54) **SHAPE MEASUREMENT METHOD, SHAPE MEASUREMENT DEVICE, MECHANICAL JOINT MEASUREMENT METHOD, MECHANICAL JOINT MEASUREMENT SYSTEM, MEASUREMENT TERMINAL, MECHANICAL JOINT MANUFACTURING METHOD, AND MECHANICAL JOINT QUALITY MANAGEMENT METHOD**

(30) Priority: 08.06.2023 JP 2023094777
(71) Applicant: JFE Steel Corporation, Tokyo, 100-0011 (JP)
(72) Inventor: OHBA, Yuto, Tokyo 100-0011 (JP)
(74) Representative: Haseltine Lake Kempner LLP
(86) International application number: PCT/JP2024/020666
(87) International publication number: WO 2024/253155

(57) **Abstract**

To more facilitate confirmation of joining in a mechanical joint regardless of a state of the mechanical joint or a pipe connected to the mechanical joint. A shape evaluation method, the method analyzing, for a set of a mechanical joint including a male joint and a female joint corresponding to the male joint, an interference level between a recess and protrusion portion of the male joint and a recess and protrusion portion of the female joint, the method includes a joining completion state setting step of setting a joining completion state in which joining of the male joint and the female joint is completed, based on data about the recess and protrusion shape of each of the male joint and the female joint; and an interference analysis step of analyzing an interference level between the recess and protrusion portion of the male joint and the recess and protrusion portion of the female joint corresponding to the recess and protrusion portion of the male joint, in the joining completion state.

## Description

### Field

The present invention relates to a shape evaluation method, a shape evaluation device, a mechanical joint evaluation method, a mechanical joint measurement system, a measurement terminal, a mechanical joint manufacturing method, and a mechanical joint quality control method in a pipe joint structure to join pipes. Background

Conventional pipe structures that are used for foundations of structures and preventing landslide may have a required length of several tens of meters depending on construction conditions. In particular, a steel pipe made of a steel material has a remarkable tendency to have a required length of several tens of meters. Upon transport of these pipe structures to construction sites, long pipe structures cannot be transported due to traffic restriction. Therefore, each of the pipe structures is divided into several meters in transportable length for transportation, and the pipe structure is joined in the middle of construction (including driving) on a construction site.

For a method of joining the pipe structure on the construction site, a mechanical joint is used. In an example, a mechanical joint as disclosed in Patent Literature 1 is used. The mechanical joint is mounted to each end of a pipe to be joined, and the pipes are joined by being joined on the construction site to construct a pipe structure.

In general, the mechanical joint is mounted in a factory in advance so that a male joint is mounted to one pipe and a female joint is mounted to another pipe, and then shipped to a site. There are several methods for a manufacturing procedure, but the male joint and the female joint are often manufactured as a set. After manufacture, depending on the usage, the set of the joints may be mounted to ends of elongated pipes in some cases.

### Citation List

### Patent Literature

Patent Literature 1: JP H10-311028 A
Patent Literature 2: JP 2017-36574 A
Patent Literature 3: JP 2016-153579 A

### Summary

### Technical Problem

In the mechanical joint, whether the male joint and the female joint to be paired with the male joint can be joined is determined depending on recess and protrusion shapes of the male and female joints corresponding to each other, and therefore, confirmation of joining is usually performed before use. However, under the condition of the mechanical joint, in particular, when the mechanical joint has a large diameter, a pipe to which the mechanical joint is connected has an elongated length, or the material of the mechanical joint or the pipe to which the mechanical joint is connected is a heavy object made of a metal material such as steel, it is difficult to perform the confirmation of joining. In this case, there is a problem such as considerable time and effort for confirmation of joining, breakage of the joint itself, or concerns about ensuring safety.

In particular, in the mechanical joint, there may be a recess and protrusion shape (fitting interference shape) that causes interference during fitting between a recess and protrusion shape of the male joint and a recess and protrusion shape of the female joint, between a joining start position where the male joint and the female joint are separated (including a state immediately before the male joint is fitted to the female joint) and a joining completion position where the joining between the male joint and the female joint is completed. When there is a fitting obstruction shape between the recess and protrusion shape of the male joint and the recess and protrusion shape of the female joint, a joint connection process may be interrupted. Therefore, there has been a demand for a technique to determine whether recess and protrusion shapes are joinable in a mechanical joint, regardless of a state of the mechanical joint or a pipe connected to the mechanical joint, before use on site.

The present invention has been made in view of the above, and an object of the present invention is to provide a shape evaluation method, a shape evaluation device, a mechanical joint evaluation method, a mechanical joint measurement system, a measurement terminal, a mechanical joint manufacturing method, and a mechanical joint quality control method that further facilitate confirmation of joining in a mechanical joint regardless of a state of the mechanical joint or a pipe connected to the mechanical joint.

### Solution to Problem

(1) To solve the problem and achieve the object, a shape evaluation method according to the present invention is the method for analyzing, for a set of a mechanical joint including a male joint and a female joint corresponding to the male joint, an interference level between a recess and protrusion portion of the male joint and a recess and protrusion portion of the female joint. The method includes: a joining completion state setting step of setting a joining completion state in which joining of the male joint and the female joint is completed, based on data about the recess and protrusion shape of each of the male joint and the female joint; and an interference analysis step of analyzing an interference level between the recess and protrusion portion of the male joint and the recess and protrusion portion of the female joint corresponding to the recess and protrusion portion of the male joint, in the joining completion state.
(2) Moreover, the shape evaluation method according to above (1) may further include at least one of: an acceptance/rejection determination step of determining acceptance or rejection for a set of the mechanical joint, based on the interference level measured in the interference analysis step; and an interference information providing step of providing, to a position determined as an interference portion based on the interference level measured in the interference analysis step, information about the interference portion.
(3) Moreover, a mechanical joint evaluation method according to the present invention includes: a shape measurement process of measuring, for a set of mechanical joint including a male joint and a female joint corresponding to the male joint, each of a recess and protrusion shape of the male joint and a recess and protrusion shape of the female joint; and a shape evaluation process of analyzing an interference level for each of the sets of the mechanical joints by the shape evaluation method according to above (1) or (2), based on data about the recess and protrusion shape measured in the shape measurement process.
(4) Moreover, a mechanical joint manufacturing method according to the present invention is the method for manufacturing a set of mechanical joint including a male joint and a female joint corresponding to the male joint. The method includes: a joint manufacturing process of manufacturing a mechanical joint; and a joint measurement process of executing the mechanical joint evaluation method according to above (3), for the set of the mechanical joint including the male joint and the female joint manufactured in the joint manufacturing process.
(5) Moreover, a mechanical joint quality control method according to the present invention is the method for managing quality of a set of a mechanical joint including a male joint and a female joint corresponding to the male joint. The method includes: a joint manufacturing process of manufacturing a mechanical joint; a joint measurement process of measuring a recess and protrusion shape of the mechanical joint by the mechanical joint evaluation method according to above (3), for the set of the mechanical joint manufactured in the joint manufacturing process; and a quality control process of controlling quality of the manufactured mechanical joint by using a result obtained from the joint measurement process.
(6) Moreover, a shape evaluation device according to the present invention is the device for analyzing, for a set of a mechanical joint including a male joint and a female joint corresponding to the male joint, an interference level between a recess and protrusion portion of the male joint and a recess and protrusion portion of the female joint. The device includes a control unit that executes: a joining completion state setting process of setting a joining completion state in which joining of the male joint and the female joint is completed, based on data about the recess and protrusion shape of each of the male joint and the female joint; and an interference analysis process of analyzing an interference level between the recess and protrusion portion of the male joint and the recess and protrusion portion of the female joint corresponding to the recess and protrusion portion of the male joint, in the joining completion state.
(7) Moreover, the shape evaluation device according to above (6) may further include a communication unit, wherein the communication unit may perform, by the control unit, at least one of: a process of acquiring data about a recess and protrusion shape of each of the male joint and the female joint; and a process of outputting information about interference level obtained in the interference analysis process.
(8) Moreover, a mechanical joint measurement system according to the present invention includes: a measurement unit configured to be able to measure, for a set of mechanical joint including a male joint and a female joint corresponding to the male joint, each of a recess and protrusion shape of the male joint and a recess and protrusion shape of the female joint; and the shape evaluation device according to above (6) or (7) that analyzes an interference level for each set of the mechanical joints, based on data about the recess and protrusion shape measured by the measurement unit.
(9) Moreover, a measurement terminal according to the present invention is the measurement terminal being configured to be able to analyze, under control of a control unit, for a set of a mechanical joint including a male joint and a female joint corresponding to the male joint, an interference level between a recess and protrusion portion of the male joint and a recess and protrusion portion of the female joint. The measurement terminal includes: a measurement unit that measures, under control of the control unit, a recess and protrusion shape of the male joint and a recess and protrusion shape of the female joint; a communication unit that executes at least one of an output process of outputting, under control of the control unit, the measured recess and protrusion shape as data, to the shape evaluation device according to above (6) or (7), and an acquisition process of acquiring information about the interference level for each set of the male joint and the female joint, from the shape evaluation device; and an output unit configured to be able to output, under the control of the control unit, the acquired information in a predetermined format.
(10) Moreover, in the measurement terminal according to above (9), the control unit may execute at least one of: an acceptance/rejection determination process of determining acceptance or rejection of a set of the mechanical joint, based on the acquired information about the interference level and a predetermined criterion; and an interference information providing process of providing information about the interference portion, to a position determined as an interference portion based on the acquired information about the interference level and the predetermined criterion.
(11) Moreover, a mechanical joint measurement system according to the present invention includes: the measurement terminal according to above (9) or (10); and the shape evaluation device according to above (6) or (7) that analyzes an interference level for each set of the mechanical joint, based on data about a recess and protrusion shape measured by the measurement terminal.
(12) Moreover, a mechanical joint quality control method according to the present invention is the method for managing quality of a set of a mechanical joint including a male joint and a female joint corresponding to the male joint. The method includes: managing quality for the set of the mechanical joint, using information about an interference level obtained from an interference analysis process executed by the control unit of the shape evaluation device according to above (6) or (7). Advantageous Effects of Invention

According to the shape evaluation method, the shape evaluation device, the mechanical joint evaluation method, the mechanical joint measurement system, the measurement terminal, the mechanical joint manufacturing method, and the mechanical joint quality control method of the present invention, it is possible to further facilitate confirmation of joining in the mechanical joint regardless of the state of the mechanical joint or the pipe connected to the mechanical joint.

### Brief Description of Drawings

FIG. 1 is a diagram illustrating a joining start state of a mechanical joint to be evaluated in a mechanical joint measurement system according to an embodiment of the present invention.
FIG. 2 is a diagram illustrating a joining completion state of the mechanical joint to be evaluated in the mechanical joint measurement system according to an embodiment of the present invention.
FIG. 3 is a block diagram illustrating a mechanical joint measurement system according to a first example of an embodiment of the present invention.
FIG. 4 is a block diagram illustrating a mechanical joint measurement system according to a second example of an embodiment of the present invention.
FIG. 5 is a flowchart illustrating a mechanical joint evaluation method according to an embodiment of the present invention.
FIG. 6 is a flowchart illustrating a shape evaluation process according to an embodiment of the present invention.
FIG. 7A is a diagram illustrating coordinates of a mechanical joint in a shape evaluation method according to an embodiment of the present invention.
FIG. 7B is a diagram illustrating the coordinates of the mechanical joint in the shape evaluation method according to an embodiment of the present invention.
FIG. 7C is a diagram illustrating the coordinates of the mechanical joint in the shape evaluation method according to an embodiment of the present invention.
FIG. 8 is an enlarged cross-sectional view illustrating a joined portion of a mechanical joint according to an embodiment of the present invention.
FIG. 9 is an enlarged cross-sectional view illustrating an interference portion in the joined portion of the mechanical joint according to an embodiment of the present invention.
FIG. 10 is an enlarged cross-sectional view illustrating a portion of a load-transfer key portion having a high interference level in the mechanical joint according to an embodiment of the present invention.
FIG. 11 is an enlarged cross-sectional view illustrating a portion of a load-transfer key portion having a high interference level in the mechanical joint according to an embodiment of the present invention.
FIG. 12 is a diagram illustrating a joining start state of a mechanical joint to be evaluated in a mechanical joint measurement system according to a first modification of an embodiment of the present invention.
FIG. 13 is a diagram illustrating a joining completion state of the mechanical joint to be evaluated in the mechanical joint measurement system according to the first modification of an embodiment of the present invention.
FIG. 14 is an enlarged cross-sectional view illustrating a joined portion of a mechanical joint according to the first modification of an embodiment of the present invention.
FIG. 15 is an enlarged cross-sectional view illustrating an interference portion in the joined portion of the mechanical joint according to the first modification of an embodiment of the present invention.
FIG. 16 is a diagram illustrating a joining start state of a mechanical joint to be evaluated in a mechanical joint measurement system according to a second modification of an embodiment of the present invention.
FIG. 17A is a diagram illustrating a state of halfway through joining the mechanical joint to be evaluated in the mechanical joint measurement system according to the second modification of an embodiment of the present invention.
FIG. 17B is a diagram illustrating a joining completion state of the mechanical joint to be evaluated in the mechanical joint measurement system according to the second modification of an embodiment of the present invention.
FIG. 18 is a diagram illustrating a joining start state of a mechanical joint to be evaluated in a mechanical joint measurement system according to a third modification of an embodiment of the present invention.
FIG. 19 is a diagram illustrating a joining completion state of the mechanical joint to be evaluated in the mechanical joint measurement system according to the third modification of an embodiment of the present invention. Description of Embodiments

Embodiments of the present invention will be described below with reference to the drawings. In all the drawings of the following embodiments, the same or corresponding portions are denoted by the same reference numerals. In addition, the present invention is not limited by the embodiments described below.

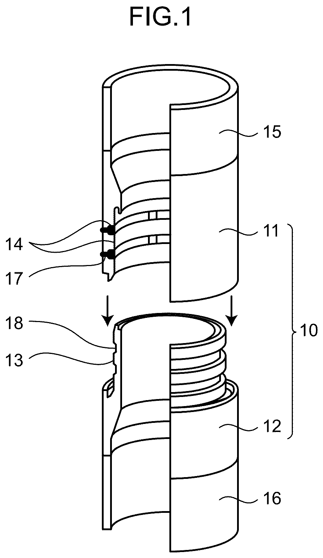

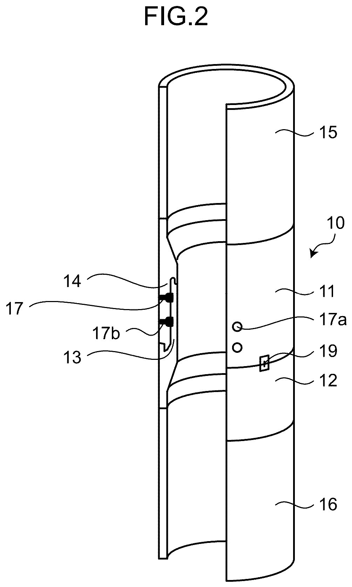

First, a description will be made of a mechanical joint as a target for measurement by a mechanical joint measurement system according to an embodiment of the present invention. FIGS. 1 and 2 are diagrams illustrating a joining start state and a joining completion state of a mechanical joint to be evaluated (target for measurement) in a shape evaluation system according to the present embodiment.

### (Male joint and female joint as targets for measurement)

As illustrated in FIG. 1, the mechanical joint 10 according to the present embodiment serves as a joint for connecting, for example, a pipe 15 and a pipe 16 to each other, and includes a female joint 11 serving as an outer box joint and a male joint 12 serving as an inner pin joint that are freely fitted to each other. Note that to fit can also be referred to as to join, as necessary.

As illustrated in FIG. 1, the female joint 11 is welded and mounted to a lower end of the pipe 15 on an upper side. Furthermore, the male joint 12 is welded and mounted to an upper end of the pipe 16 on a lower side. The female joint 11 is provided with a load-transfer key portion 17 that is appropriately divided into arcuate shapes and mounted over the entire circumference. The load-transfer key portion 17 is provided between externally fitted protrusions 14 provided on an inner peripheral side of the female joint 11.

As illustrated in FIG. 1, the female joint 11 is formed into a cylindrical shape having an outer diameter substantially the same as an outer diameter of the pipe 15. The inner periphery of the female joint 11 serves as a fitted insertion portion for a fit insertion portion of the male joint 12. The female joint 11 is provided with screw holes 17a on the outer periphery at appropriate intervals, corresponding to a mounting position of the load-transfer key portion 17. Each of the screw holes 17a penetrates the female joint 11 from the outside to the inside.

The male joint 12 is formed into a cylindrical shape, and the fit insertion portion is provided to be extended from a cylindrical portion having a diameter substantially the same as an outer diameter of the pipe 16 and to have a diameter smaller than that of the cylindrical portion. An engagement recess into which an engagement protrusion of the female joint 11 is inserted is formed on a base end side of the outer periphery of the fit insertion portion. The fit insertion portion has a front end provided with the engagement protrusion over the entire circumference. Furthermore, a key groove 18 into which the load-transfer key portion 17 is fitted is provided over the entire circumference between internally fitted protrusions 13 on the outer peripheral side of the fit insertion portion of the male joint 12. When the load-transfer key portion 17 is fitted into the key groove 18, the female joint 11 and the male joint 12 are coupled together via the load-transfer key portion 17. Therefore, as illustrated in FIG. 2, the pipes 15 and 16 on the upper and lower sides are mechanically connected in a longitudinal direction.

The load-transfer key portion 17 is mounted to the female joint 11, and the load-transfer key portion 17 is provided with a joining screw 17b including, for example, a hexagon socket stud bolt. The load-transfer key portion 17 is screwed to the screw hole 17a of the female joint 11, for mounting. In screwing, the female joint 11 and the male joint 12 are butted against each other, and the male joint 12 is inserted into the female joint 11, and therefore, the female joint 11 and the male joint 12 are positioned in the longitudinal direction, and a front end of the load-transfer key portion 17 is arranged at the inlet of the key groove 18 of the male joint 12.

Thereafter, the joining screw 17b is rotated by a hexagonal wrench or the like from outside the screw hole 17a illustrated in FIGS. 1 and 2. The load-transfer key portion 17 is advanced along an axis of the joining screw 17b and enters the key groove 18. Therefore, the female joint 11 and the male joint 12 are coupled together.

At a seam where the female joint 11 and the male joint 12 are coupled together, one or a plurality of recesses is provided across both the female joint 11 and the male joint 12, at appropriate circumferential intervals, and an anti-rotation key 19 for suppressing relative rotation between the female joint 11 and the male joint 12 is mounted. The anti-rotation key 19 is provided across both the female joint 11 and the male joint 12, and therefore, the female joint 11 and the male joint 12, that is, the connected pipes 15 and 16 on the upper and lower sides are inhibited from axially relatively rotating.

Materials of the pipes 15 and 16, the female joint 11, and the male joint 12 are not particularly limited. Examples of the materials include a steel, a metal material other than the steel, concrete, resin, a combination of a plurality of materials, and the like. A material of the mechanical joint is selected according to a purpose of use and a condition of each of the pipes or the like which is described later. The present invention is particularly effective for the mechanical joint 10 for which it is difficult to perform confirmation of joining before factory shipment, due to a large diameter of 700 mm or more, a length of the pipes 15 and 16 to which the mechanical joint is connected of 5 m or more, or a heavy weight.

Each of the pipes 15 and 16 constitutes a structure. The pipe 15 constitutes an upper structure. The pipe 16 constitutes a lower structure. For the structure, various structures, such as a structure having a predetermined function while being embedded in the ground or the like, a structure used as a part of a structure on the ground, and a structure transporting a gas or a liquid such as using an internal space of the pipes 15 and 16, can be adopted. Examples of the structure having a predetermined function while being embedded in the ground include a pile, an earth retaining pile, a landslide prevention pile, a pipe sheet pile, a sheet pile wall, and a tunnel. Examples of the structure used as a part of a structure on the ground include a column and a beam. Examples of the structure transporting a gas or a liquid by using the internal space of the pipes 15 and 16 include oil country tubular goods, a water pipe, and a gas pipe. Furthermore, examples of the pipes 15 and 16 include a steel pipe, a concrete pipe, a resin pipe, a pipe formed by combining a plurality of materials, and the like. In the present invention, the pipes 15 and 16 have a large diameter, an elongated length, or a heavy weight, and therefore, the present invention is particularly effective for steel pipes with mechanical joints for which it is difficult to perform confirmation of joining before factory shipment.

In the present embodiment, the female joint 11 having the externally fitted protrusions 14 is fixed to the pipe 15 on the upper side, and the male joint 12 having the internally fitted protrusions 13 is fixed to the pipe 16 on the lower side. Furthermore, in contrast to the above description, the female joint 11 may be fixed to the pipe 16 on the lower side, and the male joint 12 may be fixed to the pipe 15 on the upper side. In addition, the female joint 11 and the male joint 12 may be directly used as the targets for measurement without connecting the pipes 15 and 16.

### (First example of embodiment)

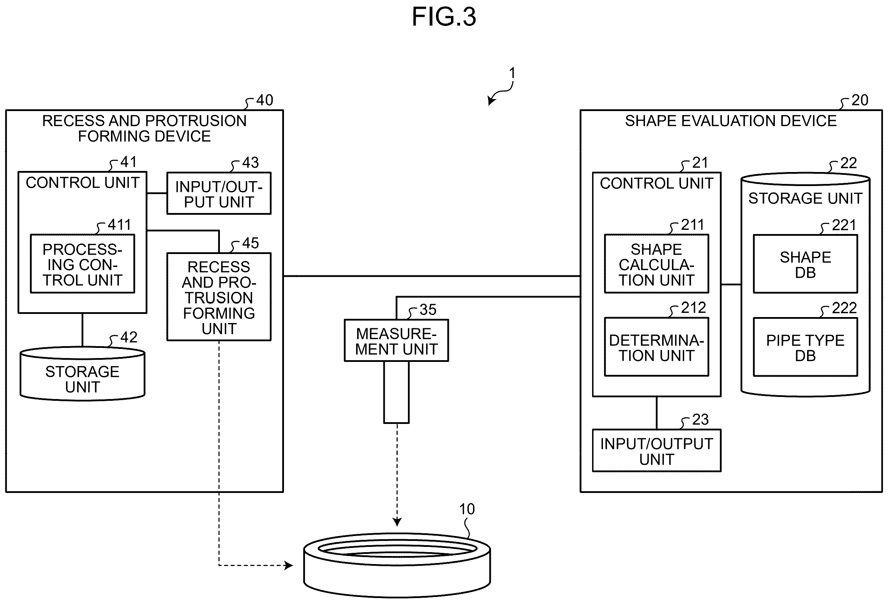

Next, a description will be made of a mechanical joint measurement system according to a first example of the embodiment of the present invention. FIG. 3 is a block diagram illustrating the mechanical joint measurement system according to an embodiment.

As illustrated in FIG. 3, the mechanical joint measurement system 1 includes a shape evaluation device 20 and a measurement unit 35. Furthermore, the shape evaluation device 20 is connected to a recess and protrusion forming device 40. The mechanical joint measurement system 1 may employ a configuration including the shape evaluation device 20, the measurement unit 35, and the recess and protrusion forming device 40. In addition, in the mechanical joint measurement system 1 according to an embodiment, it is assumed that the shape evaluation device 20 is used in a fixed manner, but the measurement unit 35 and the shape evaluation device 20 may be at a short distance or a long distance.

### (Shape evaluation device)

The shape evaluation device 20 includes a control unit 21, a storage unit 22, and an input/output unit 23. Note that the input/output unit 23 may not be provided. For the shape evaluation device 20, a known computer, server, laptop computer, mobile terminal, tablet, smartphone, a virtual device on a network such as a cloud, or the like can be used.

Specifically, a control unit 31 as control means includes a processor such as a central processing unit (CPU), a digital signal processor (DSP), or a field-programmable gate array (FPGA) having hardware, and a main storage unit such as a random access memory (RAM) or a read only memory (ROM) (none of which is illustrated).

The storage unit 22 physically includes a storage medium selected from a volatile memory such as RAM, a nonvolatile memory such as ROM, an erasable programmable ROM (EPROM), a hard disk drive (HDD), a solid state drive (SSD), a removable medium, and the like. Note that the removable medium is a universal serial bus (USB) memory, or a disk recording medium such as a compact disc (CD), a digital versatile disc (DVD), or a Blu-ray (registered trademark) disc (BD). Furthermore, the storage unit 22 may be configured using a computer-readable recording medium such as a memory card that can be mounted from the outside. The storage unit 22 is configured to store an operating system (OS), various programs, various tables, various databases, and the like for executing the operation of the shape evaluation device 20. The various programs include a learning model and a neural network. These various programs can be widely distributed by being recorded in a computer-readable recording medium such as a hard disk, a flash memory, CD-ROM, DVD-ROM, or a flexible disk.

The storage unit 22 stores a shape database 221 and a pipe type database 222. The pipe type database 222 stores, as basic information, various information (pipe type information) about the female joint 11 and the male joint 12 constituting a mechanical joint 10 in a searchable manner. Note that the pipe type information includes information such as an identification ID of the mechanical joint 10, dimensions (diameter, recess and protrusion dimensions, recess and protrusion pitch, recess and protrusion height, length, and the like) of each of the female joint 11 and the male joint 12, specifications, and the like. The shape database 221 stores information about clearances between the internally fitted protrusions 13 and the externally fitted protrusions 14 based on the pipe type information, and information (hereinafter referred to as shape information) about results of measurement of interference levels between the internally fitted protrusions 13 and the externally fitted protrusions 14, measured by the measurement unit 35 which is described later, in a searchable manner. Note that the shape information includes, in addition to the information about results of measurement of the interference levels, various information related to interference, such as flag information as information about an interference portion that specifies an interference position, and information about acceptance or rejection of a set of the mechanical joint 10.

The control unit 21 includes a shape calculation unit 211 that is configured to be able to store, as digital data, recess and protrusion shape of each of the internally fitted protrusions 13 and the externally fitted protrusions 14, measured by the measurement unit 35, in the shape database 221 of the storage unit 22. The storage unit 22 may be provided in a housing different from that of the control unit 21, and can use a virtual storage device such as an external storage device or a cloud on a network.

In the present embodiment, the control unit 21 loads a program stored in the storage unit 22 into a work area of a main storage unit to execute the program, and controls each component portion and the like through the execution of the program, thus enabling implementation of a function for a predetermined purpose. Specifically, the control unit 21 executes programs to enable implementation of the functions of the shape calculation unit 211 and a determination unit 212.

The input/output unit 23 includes, for example, a touch screen display, a speaker microphone, a button, a switch, a jog dial, or the like. The input/output unit 23 as an output unit is configured to notify the outside of predetermined information by displaying characters, a figure, or the like on a screen of a display such as a liquid crystal display, an organic EL display, or a plasma display, or outputting voice from a speaker, under the control of the control unit 21. The input/output unit 23 includes a printer that prints predetermined information on printing paper or the like and outputs the information. Various information stored in the storage unit 22 can be confirmed on, for example, the display or the like of the input/output unit 23 installed in a predetermined office or the like.

The input/output unit 23 as an input unit selectively includes, for example, a keyboard, a touch screen keyboard incorporated in the input/output unit 23 to detect a touch operation on a display panel, a voice input device enabling an external call, a switch, a jog dial, or the like. When a cross-sectional shape of the recess and protrusion of the internally fitted protrusion 13 or the externally fitted protrusion 14 is visually evaluated using the input/output unit 23 as output means, the input/output unit 23 as input means can input an evaluation value about the shape from the input/output unit 23, as the shape information. Although details will be described later, it is also possible to perform input such as setting a flag or putting down the flag on the basis of presence or absence of interference between the internally fitted protrusion 13 and the externally fitted protrusion 14, from the input/output unit 23. Specifically, "0" may be input from the input/output unit 23 when there is interference between the internally fitted protrusion 13 and the externally fitted protrusion 14, and "1" may be input from the input/output unit 23 when there is no interference.

### (Measurement unit)

The measurement unit 35 includes at least one, for example, handheld 3D scanner. For the 3D scanner, for example, a laser irradiation device, an infrared irradiation device, or the like can be adopted. The handheld 3D scanner needs to be operated while maintaining a focal length (e.g., 20 cm to 40 cm) according to a model, and therefore, it is desirable to ensure a space of at least 50 cm around a scanned target.

From the viewpoint of determining whether the female joint 11 and the male joint 12 can be joined or fitted to each other, the measurement unit 35 preferably has a measurement accuracy set to approximately half or less of a desired interference level, specifically, for example, approximately 0.375 (= 0.75/2) mm or less when the interference level is 0.75 mm. Note that the measurement accuracy is variously set according to the size of the mechanical joint 10, the recess and protrusion shapes of the internally fitted protrusion 13 and the externally fitted protrusion 14, and the like, but is not limited to these numerical values. In particular, the mechanical joint 10 having a three-dimensional shape is apt to cause occurrence of a blind spot due to a recess and protrusion portion, and therefore, for example, a handheld 3D scanner that is a handheld measurement device is desirable from the viewpoint of operability. Note that, in general, a handheld 3D scanner of a high-accuracy type requires application of shape measurement markers to an object approximately every 10 centimeters. Meanwhile, when the mechanical joint 10 has a large size, a marker-free handheld 3D scanner that does not require application of the shape measurement marker is desirably used, from the viewpoint of efficiency.

Specifically, a sensor constituting the measurement unit 35 is configured to measure a distance from an installation position to the object, for example, to an upper surface of the internally fitted protrusion 13 or the externally fitted protrusion 14 by irradiation and reflection of predetermined light such as laser light. The measurement unit 35 enables performing so-called sensing that measures a distance from a measurement position to the surface of the object, in association with two-dimensional position information. The sensing includes various measurements performed by the measurement unit 35. For the two-dimensional position information, coordinates (x,y) on an xy plane, coordinates (r,θ) at a distance r and a displacement angle θ, and the like can be used. On the basis of information about the distance corresponding to the two-dimensional position information as well, it is possible to three-dimensionally measure the recess and protrusion shape on a surface of the internally fitted protrusion 13 or the externally fitted protrusion 14.

In addition, when selecting equipment for the measurement unit 35, higher resolution is preferably employed. In this case, any resolution may be employed as long as the recess and protrusion shapes that affect the interference level used to determine whether the female joint 11 and the male joint 12 can be joined may be accurately reproduced. In the present embodiment, local unevenness may be less likely to occur in the recess and protrusion shape of the internally fitted protrusion 13 or the externally fitted protrusion 14 in some cases, and therefore, the resolution is preferably approximately 1 mm or less, but is not limited to this numerical value. In addition, the female joint 11 and the male joint 12 are combined on the scanned data to determine whether the joints can be joined, and therefore, for the object whose direction is not fixed in one direction, it is desirable to ensure directionality by providing a marker recognized by scanning or a mark based on a shape.

The measurement unit 35 outputs measurement values of the recess and protrusion shapes measured by sensing, to the shape evaluation device 20. The shape calculation unit 211 in the control unit 21 of the shape evaluation device 20 stores the acquired measurement values in the shape database 221 of the storage unit 22.

### (recess and protrusion forming device)

The recess and protrusion forming device 40 is a device for an adjustment process for the internally fitted protrusion 13 and the externally fitted protrusion 14 of the mechanical joint 10. The recess and protrusion forming device 40 includes a control unit 41, a storage unit 42, an input/output unit 43, and a recess and protrusion forming unit 45. The control unit 41, the storage unit 42, and the input/output unit 43 are functionally and physically configured similarly to the control unit 21, the storage unit 22, and the input/output unit 23, respectively. The recess and protrusion forming device 40 is connected to the shape evaluation device 20.

The control unit 41 loads a program stored in the storage unit 42 into a work area of a main storage unit to execute the program, and controls each component portion and the like through the execution of the program, thus enabling implementation of a function for a predetermined purpose. Specifically, the control unit 41 executes a program to enable implementation of the function of a processing control unit 411. The processing control unit 411 is configured to enable controlling the recess and protrusion forming unit 45.

The shape calculation unit 211 of the shape evaluation device 20 reads the shape information from the shape database 221 stored in the storage unit 22, and outputs the shape information to the recess and protrusion forming device 40. The recess and protrusion forming device 40 that has acquired the shape information at least temporarily stores the acquired shape information in the storage unit 42. When an instruction to correct the interference portion of the internally fitted protrusion 13 or the externally fitted protrusion 14 is input from an operator or the like through the input/output unit 43, the processing control unit 411 of the control unit 41 controls the recess and protrusion forming unit 45 to execute processing to correct the interference portion on the basis of the acquired shape information. The recess and protrusion forming device 40 may be integrated with the shape evaluation device 20. Furthermore, the mechanical joint 10 can be manufactured by the recess and protrusion forming device 40. The mechanical joint measurement system 1 according to the first example of the embodiment is configured as described above.

### (Second example of embodiment)

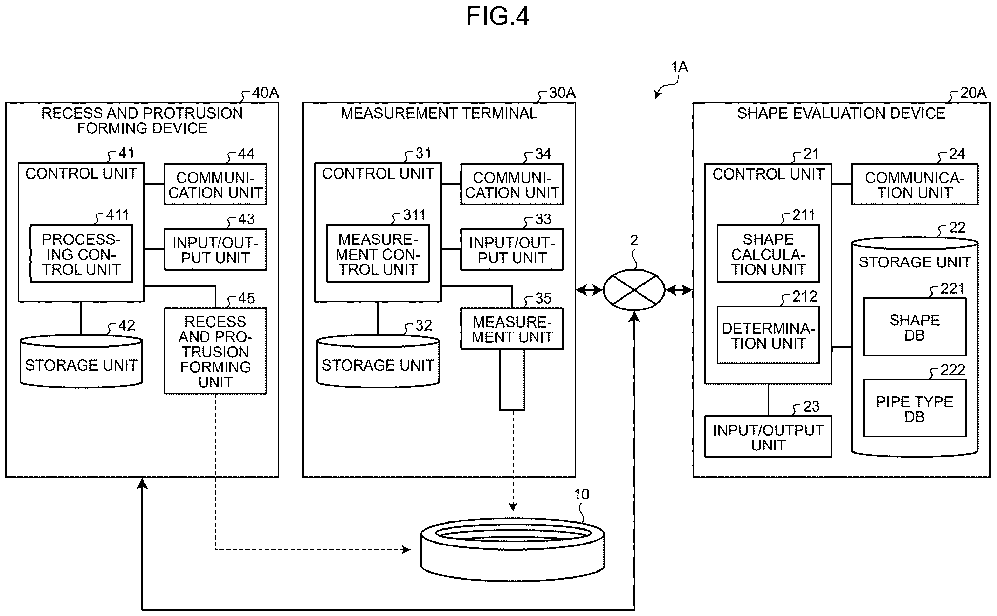

Next, a description will be made of a mechanical joint measurement system according to a second example of the embodiment of the present invention. FIG. 4 is a block diagram illustrating the mechanical joint measurement system according to the second example of the embodiment. As illustrated in FIG. 4, the mechanical joint measurement system 1A includes the shape evaluation device 20 and a measurement terminal 30A that are communicable with each other via a network 2.

The network 2 is, for example, a public communication network such as the Internet, and includes, for example, a combination of one or more of a local area network (LAN), a wide area network (WAN), a telephone communication network or public network for mobile phone and the like, a virtual private network (VPN), a dedicated line, and the like. In the network 2, wired communication and wireless communication are appropriately combined.

The mechanical joint measurement system 1A may be further connected to the recess and protrusion forming device 40 communicable with at least the shape evaluation device 20 via the network 2. Note that the mechanical joint measurement system 1A may employ a configuration including the shape evaluation device 20 and the measurement terminal 30A, and the recess and protrusion forming device 40.

### (Shape evaluation device)

A shape evaluation device 20A includes the control unit 21, the storage unit 22, the input/output unit 23, and a communication unit 24. The communication unit 24 as communication means is, for example, a local area network (LAN) interface board, a wireless communication circuit for wireless communication, or the like. The LAN interface board or the wireless communication circuit is connected to the network 2. The communication unit 24 is connected to the network 2 to communicate with the measurement terminal 30A and a recess and protrusion forming device 40A. The other configurations are similar to those of the shape evaluation device 20 according to an embodiment.

### (Measurement terminal)

The measurement terminal 30A includes a control unit 31, a storage unit 32, an input/output unit 33, a communication unit 34, and the measurement unit 35. The control unit 31, the storage unit 32, the input/output unit 33, and the communication unit 34 have physically and functionally similar configurations to those of the control unit 21, the storage unit 22, the input/output unit 23, and the communication unit 24 which are described above.

Furthermore, the measurement unit 35 in the measurement terminal 30A according to the second example of the embodiment is configured similarly to the measurement unit 35 in the first example of the embodiment. The control unit 31 loads a program stored in the storage unit 32 into a work area of a main storage unit to execute the program, thus enabling a function for a predetermined purpose. Specifically, the control unit 31 executes a program to enable implementation of the function of a measurement control unit 311. The measurement control unit 311 is configured to enable controlling the measurement unit 35.

### (recess and protrusion forming device)

The recess and protrusion forming device 40A includes the control unit 41, the storage unit 42, the input/output unit 43, a communication unit 44, and the recess and protrusion forming unit 45. The communication unit 44 as communication means is physically and functionally configured similarly to the communication unit 24 described above, and connected to the network 2. The communication unit 44 is connected to the network 2 to communicate with at least the shape evaluation device 20A. The other configurations are similar to those of the recess and protrusion forming device 40 according to an embodiment. The mechanical joint measurement system 1A according to the second example of the embodiment is configured as described above.

### (One embodiment)

### (Mechanical joint evaluation method)

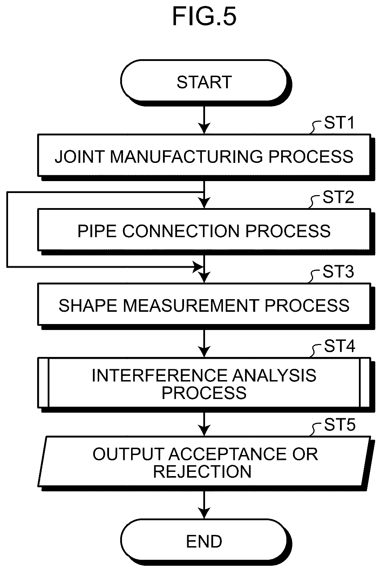

Next, a description will be made of a measurement method for the mechanical joint 10 by using the mechanical joint measurement system 1 according to the first example of the embodiment or the mechanical joint measurement system 1A according to the second example, which are configured as described above. FIG. 5 is a flowchart illustrating the measurement method for the mechanical joint 10 according to an embodiment.

### (Mechanical joint manufacturing process)

As illustrated in FIG. 5, first, in Step ST1, a joint manufacturing process is performed by the recess and protrusion forming device 40. In Step ST1, first, a forged ring is manufactured by heat treatment. Next, a cutting edge is butted on a casting ring for cutting, and processes the casting ring into each joint. Note that movement of the cutting edge is automatically controllable by the control of the processing control unit 411 according to a predetermined program. After the recess and protrusion shapes of the joints are formed, trial joining is actually performed, and the male joint 12 and the female joint 11 are joined together so that arrival lines of the joints may match each other. Here, although a starting line is not marked, the joining is started so that the axes of the arrival lines at the male joint 12 and the female joint 11 match each other. Note that it is not always necessary to use the forged ring, and a steel pipe or the like having a plate thickness large enough to be cut may be used.

### (Pipe connection process)

Next, the process proceeds to Step ST2 to perform a pipe connection process. In Step ST2, first, the joining of the mechanical joint performed in Step ST1 is released. Next, one of the female joint 11 and the male joint 12, for example, the female joint 11 here, is mounted to a horizontally positioned pipe. Next, trial joining of a single body of the male joint 12 to the horizontally positioned pipe with the female joint is performed. After it is confirmed whether the male joint 12 reaches the arrival line in the trial joining, the joining is released. Subsequently, the other of the female joint 11 and the male joint 12, for example, the male joint 12 here, is mounted to a horizontally positioned pipe.

Here, in a combination of a steel mechanical joint and a pipe, it is confirmed whether the steel mechanical joint and the pipe can be joined up to a joining completion position while permitting an influence of thermal deformation due to welding, in this trial joining. When a combination of the steel mechanical joint and a pipe is a combination of the steel mechanical joint and a pipe sheet pile, a steel coupling joint to laterally couple the pipes is welded, and then the mechanical joint is welded to the pipe. Here, the coupling joint may be welded after the mechanical joint is welded. Note that Step ST2 may not be performed.

### (Mechanical joint evaluation method)

Here, a description will be made of a mechanical joint evaluation method according to the present embodiment. The present embodiment includes a shape measurement process of measuring a shape of the mechanical joint after processing, and the shape evaluation process for a set of the mechanical joint based on the measured shape of the mechanical joint. These shape measurement process and shape evaluation process are performed before the mechanical joint 10 is actually used.

### (Shape measurement process)

In other words, after Step ST1 or Step ST2 is performed, the process proceeds to Step ST3 to perform the shape measurement process. In the shape measurement process, first, the measurement unit 35 measures the recess and protrusion shape of each of the externally fitted protrusion 14 of the female joint 11 and the internally fitted protrusion 13 of the male joint 12, for a set of the mechanical joint 10 manufactured in Step ST1. The measurement unit 35 outputs or transmits (hereinafter, referred to as transmit) measurement data of the measured recess and protrusion shape to the shape evaluation device 20. Here, in the shape measurement process of the mechanical joint 10, the measurement of the recess and protrusion shape using the measurement unit 35 is performed, for example, by measuring a distance from the measurement unit 35 to a surface of the mechanical joint (female joint 11 and male joint 12).

Furthermore, in the shape evaluation process for the mechanical joint 10, the recess and protrusion shape can also be evaluated by photogrammetry that uses a plurality of images from a plurality of pieces of image data acquired by imaging the mechanical joint (female joint 11 and male joint 12) from a plurality of viewpoints. Specifically, after the handheld 3D scanner constituting the measurement unit 35 acquires point cloud data, the acquired point cloud data is polygonized (converted into STL or meshed), and shape measurement and virtual placement are performed by CAD software that three-dimensionally measures the mechanical joint 10 as the object. Here, in order to achieve the virtual placement, for example, when the shape is grasped in detail, it is preferable to use vertices of the recess and protrusion as data points. In other words, in order to measure the recess and protrusion shape, it is preferable for each of the data points of the point cloud data to include each of the vertices of the recess and protrusion, and in practice, the resolution is preferably set equal to or less than a curvature radius of the vertex of the recess and protrusion, for example, the resolution is preferably set to 0.5 mm or less.

However, local protrusion or the like may be less likely to occur for the recess and protrusion shape in some cases, and the resolution may be set to approximately 1 mm in consideration of the fact that contact affecting the joinability is a surface contact with the surface of the recess and protrusion. In addition, in an example, when the resolution is set to half or less of the clearance as a target of the accuracy of the data point, specifically, for example, 0.375 mm or less if the clearance is 0.75 mm, it is possible to perform determination with an accuracy sufficient for practical use.

Note that the CAD software for the three-dimensional measurement is used to determine joining between the female joint 11 and the male joint 12 regarded as rigid bodies. Therefore, there is no problem to determine acceptance when there is a clearance between the female joint 11 and the male joint 12, but even when there is an interference therebetween to some extent, fitting can be performed due to deformability of the joint as an elastic body in some cases.

As described above, setting a determination criterion value in consideration of the measurement accuracy, negligible local contact, frictional resistance, an amount of elastic deformation, and use conditions (directionality upon joining, such as vertical, horizontal, or oblique direction, and outside air temperature) enables determination with high accuracy. Here, the determination criterion value is not necessarily based on 0, and for example, it may be determined whether fitting is possible, on the basis of a digital clearance of -0.2 mm (virtual interference amount of 0.2 mm). In addition, depending on the measurement accuracy, there is an interference even when a clearance value is positive in some cases, and it is desirable to set an appropriate determination criterion. Note that whether the clearance value is positive or negative depends on the way of organizing, and thus, the negative value may be defined as a state in which there is a clearance.

Furthermore, it is not always necessary to measure the whole of the mechanical joint 10, and it is preferable to measure an outer surface side of the female joint 11 and an inner surface side of the male joint 12 by the measurement unit 35. In this case, a measurement time can be reduced or the volume of the measurement data can be reduced. In addition, when the acquired point cloud data is polygonized (converted into STL or meshed), points within a predetermined range of surface error (e.g., 0.01 mm) can be omitted, and a data volume can also be reduced.

### (Shape evaluation process)

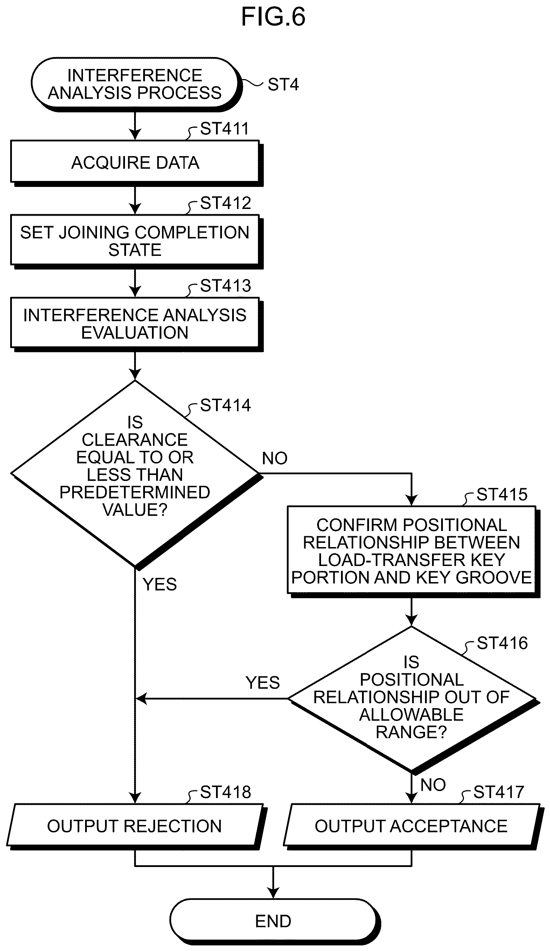

Next, the process proceeds to Step ST4, and an interference analysis process as a shape evaluation method will be described. FIG. 6 is a flowchart illustrating an interference analysis method according to an embodiment. The flowchart illustrated in FIG. 6 is performed by the shape evaluation device 20.

### (Acquisition step)

As illustrated in FIG. 6, in the shape evaluation method according to an embodiment, first, in Step ST411 as an acquisition step, the control unit 21 of the shape evaluation device 20 acquires measurement data from the measurement unit 35. The measurement data is measurement data about the recess and protrusion shape of the externally fitted protrusion 14 of the female joint 11 and the recess and protrusion shape of the internally fitted protrusion 13 of the male joint 12, measured by the measurement unit 35 in Step ST3.

### (Joining completion state setting step)

Next, the process proceeds to Step ST412 as a joining completion state setting step, and the shape calculation unit 211 of the control unit 21 executes a joining completion state setting process in which the male joint 12 is joined to the inside of the female joint 11, on the basis of the acquired measurement data of the recess and protrusion shapes of the internally fitted protrusion 13 and the externally fitted protrusion 14.

In the present invention, the "joining completion state" represents a state in which the entire length of a recess and protrusion portion of the male joint 12 in a pipe axis direction is substantially accommodated inside the female joint 11, and the internally fitted protrusion 13 and the externally fitted protrusion 14 are paired and the joining is completed, as illustrated in FIG. 2 (e.g., eye marks match each other). Ideally, a portion of the male joint 12 without the recess and protrusion is in contact with a front end portion of the female joint 11, but a front end portion of the male joint 12 and a bottom surface of the female joint 11 may be in contact with each other. Note that, when there is no line, eye mark, or the like indicating joining completion, which is set in advance, it is also possible to set the joining completion position with a shoulder touched state as an initial position, or to set the joining completion position according to a positional relationship based on an accessory such as a pipe. In the mechanical joint 10 according to the present embodiment, the joining completion position is a state immediately before the load-transfer key portion 17 is slid in a state where insertion of the male joint 12 into the female joint 11 is completed.

In the present invention, the important feature is that the joining completion state is set as the initial position and the evaluation of the interference level is started from the joining completion state. In the present embodiment, the joining completion state is set as the initial position, and evaluation of the shape is performed in the joining completion state. Normally, when the joining is confirmed by the actual mechanical joint 10, whether the internally fitted protrusion 13 and the externally fitted protrusion 14 can be joined is confirmed at a position where the protrusions being moved to a combined position are stopped. In particular, when virtual joining is simulated using an information processing device such as a computer, a plurality of conditions can be considered, for example, in a circumferential direction or the axis direction for setting a position where the female joint 11 and the male joint 12 start joining. In this case, it is necessary to examine many patterns in order to confirm whether the joining can be performed.

Meanwhile, the joining completion position where joining between the female joint 11 and the male joint 12 is completed can be readily set in any environment, including a virtual case. Therefore, in the present embodiment, setting the joining completion position as the initial position and evaluating the shape make it possible to simplify a fitting interference analysis process, and to facilitate evaluation and analysis of the shape regardless of the conditions of the mechanical joint 10 or the connected pipes 15 and 16.

### (Interference analysis step)

Next, the process proceeds to Step ST413 as an interference analysis step, and the shape calculation unit 211 of the control unit 21 derives an interference state between the internally fitted protrusion 13 and the externally fitted protrusion 14, on the basis of measurement data about the externally fitted protrusion 14 and the load-transfer key portion 17, in the female joint 11 and measurement data about the internally fitted protrusion 13 and the key groove 18, in the male joint 12, in the joining completion state. Derivation of the interference state by the shape calculation unit 211 is executed at a preset position.

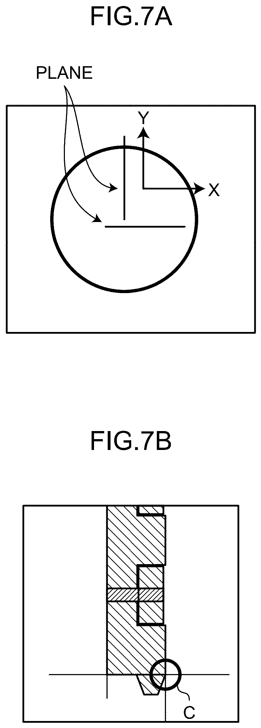

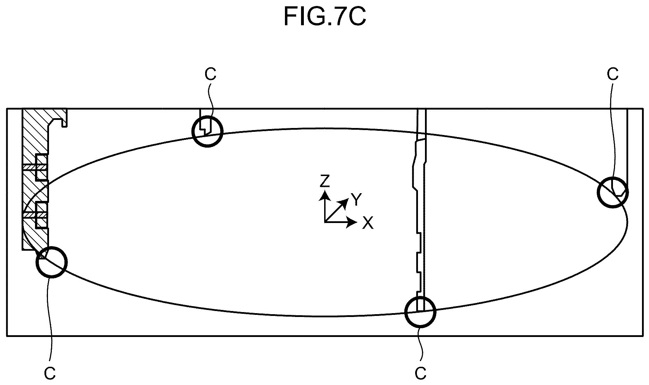

Here, FIGS. 7A, 7B, and 7C illustrate a method of creating a coordinate system of the measurement position. In other words, as illustrated in FIG. 7A, a plane is created that creates a cross-section of the externally fitted protrusion 14 of the female joint 11 taken along a radial direction and a cross-section of the internally fitted protrusion 13 of the male joint 12, and a section line L illustrated in FIG. 7B is created. Next, two straight lines l are created from the section line to create an intersection point C. Next, as illustrated in FIG. 7C, a circle (hereinafter, referred to as fit circle) having a minimum error from points (specified points) for which a curve is specified is created. The coordinate system is created on the basis of the center point of the fit circle and a plurality of the intersection points C. Note that the method of creating the coordinate system described with reference to FIGS. 7A to 7C is merely an example, and creation and setting of the coordinate system can be performed by any method.

In the present embodiment, first, a center axis is set in each of the female joint 11 and the male joint 12. For a method of setting the center axis, for example, a method can be adopted that virtually generates a fitting cylinder obtained by averaging an outer surface of the female joint 11 and setting the center axis of the generated fitting cylinder as the center axes of the female joint 11 and the male joint 12. Note that a fitting cylinder obtained by averaging an inner surface of the male joint 12 may be generated. Next, the female joint 11 and the male joint 12 whose center axes have been aligned with each other are moved in the axis direction so that shoulder portions thereof that transmit a compressive load are set to make contact with each other. Here, as long as the compressive load can be transmitted, the shoulder portions may be perpendicular to or oblique to the axes. Next, in the circumferential direction, the female joint 11 and the male joint 12 are adapted to a position where the anti-rotation key 19 can be inserted. Note that an alignment line such as an eye mark may be applied in advance.

Returning to FIG. 6, on the basis of the coordinate system created in this manner, it is possible to select, as the preset positions, four positions shifted by, for example, 90° on the circumference relative to the center of the circle in a cross section (a plane perpendicular to a vertical direction in FIGS. 1 and 2) of the female joint 11 or the male joint 12. Note that the preset positions may be eight positions shifted, for example, by 45° on the circumference relative to the center of the circle, and are not necessarily limited to predetermined positions or the number of positions.

In Step ST413, as described above, the shape calculation unit 211 generates a cross-sectional view of the recess and protrusion from data about the recess and protrusion shape, at the preset four or eight positions, and derives shape information about a shape between the recesses and protrusions of the internally fitted protrusion 13 and the externally fitted protrusion 14. In this manner, setting a method of obtaining evaluation points as illustrated in FIGS. 7A to 7C enables the shape calculation unit 211 to automatically calculate determined positions by a predetermined method. Note that the input/output unit 23 of the shape evaluation device 20 may be caused to output the cross-sectional view of the recess and protrusion generated by the shape calculation unit 211 so that an operator may visually determine an interference state (interference level) affecting joining or fitting to input the interference level from the input/output unit 23.

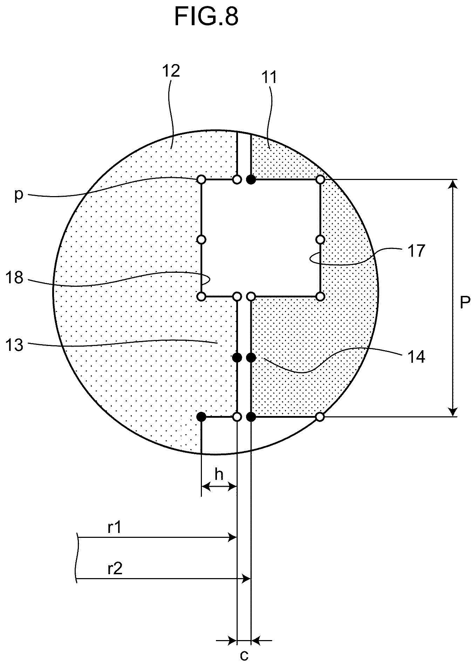

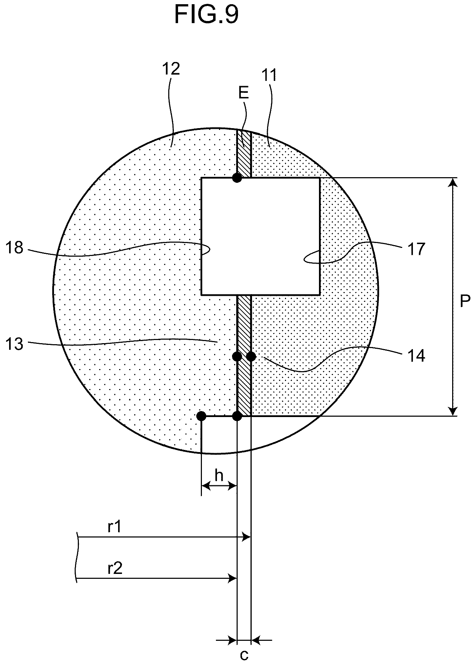

Furthermore, FIGS. 8 and 9 illustrate an example of a cross-section of the mechanical joint 10 converted into data, generated by the shape calculation unit 211 of the shape evaluation device 20 according to an embodiment. FIG. 8 is an enlarged cross-sectional view of a part of the load-transfer key portion 17 and the key groove 18 in a state in which the internally fitted protrusion 13 and the externally fitted protrusion 14 of the mechanical joint 10 converted into data do not interfere with each other and insertion of the male joint 12 into the female joint 11 is completed. FIG. 9 is an enlarged cross-sectional view of a part of a state in which the internally fitted protrusion 13 and the externally fitted protrusion 14 of the mechanical joint 10 converted into data partially interfere with each other.

As illustrated in FIG. 8, when no interference occurs between the internally fitted protrusion 13 and the externally fitted protrusion 14, an installation position of the load-transfer key portion 17 and the position of the key groove 18 match each other, and the interference level is low, the female joint 11 and the male joint 12 can be joined.

Here, the interference level is determined as follows. In other words, upon contact of the front end outside the joint at a fitting position, the magnitude of the interference level is determined, according to whether the key groove 18 is ensured. When the key groove 18 is ensured, it is determined that the interference level is low, and when the key groove is not ensured, it is determined that the interference level is high. In addition, when a ring groove for the load-transfer key portion 17 is formed, it is also possible to determine the magnitude of the interference level, according to whether the ring groove is ensured, upon contact of the front end outside the joint at the fitting position. Furthermore, when the load-transfer key portion 17 is caused to enter the key groove 18 by driving the joining screw 17b for the load-transfer key portion 17, at the fitting position, it is also possible to determine the magnitude of the interference level, according to whether a clearance for the joining screw 17b, and the key groove 18 are ensured.

Specifically, for example, the internally fitted protrusion 13 that is appropriately joined has a height h of, for example, 8 mm or more and 20 mm or less. Note that the center of each of the internally fitted protrusion 13 and the externally fitted protrusion 14 is defined as the closest point to half a distance between the corners of the internally fitted protrusion 13. In addition, white points p are measurement points at which sufficient resolution can be ensured with respect to the internally fitted protrusion 13 of the male joint 12 and the externally fitted protrusion 14 of the female joint 11. As the number of these white points p increases, the determination accuracy of the center positions of the internally fitted protrusion 13 and the externally fitted protrusion 14 can be improved.

The height h of the internally fitted protrusion 13 is a distance between the upper surface of the internally fitted protrusion 13 and a bottom surface of the key groove 18. Similarly, a height h of the externally fitted protrusion 14 is a distance between the upper surface of the externally fitted protrusion 14 and a bottom surface of an installation portion for the load-transfer key portion 17. In addition, a radial clearance c between the internally fitted protrusion 13 and the externally fitted protrusion 14 is set to, for example, 0.75 mm. Note that the clearance c is defined as a radial component of the center axis of the male joint 12, in a line connecting the center of the internally fitted protrusion 13 and the center of the externally fitted protrusion 14. In other words, the clearance c can be derived as c = r2 - r1, from a distance r1 of a plane in circumferential contact with the internally fitted protrusion 13 of the male joint 12 from a center of a diameter of the male joint 12, and a distance r2 of the externally fitted protrusion 14 of the female joint 11 from the center of the diameter of the male joint 12.

The clearance c is not necessarily limited to the above definition, and various definitions can be set depending on whether the mechanical joint 10 can be joined. For example, in another example of the definition of the clearance c, a position determination method in consideration of the vertexes of the internally fitted protrusion 13 and the externally fitted protrusion 14 can be adopted. In other words, when the vertexes to be measured are determined in advance and are obliquely connected, a distance corresponding to a radial direction or the axis direction between the connected vertexes can be measured to obtain the clearance c. In addition, a distance normal to each point or a line connecting the points in the male joint 12, that is, to each mesh may be calculated to set a distance upon making contact with the female joint 11 in a joined state, that is, the shortest distance, as the clearance c. In contrast, the distance may be measured in a direction from the female joint 11 toward the male joint 12. Furthermore, depending on a condition, visual examination, examination with the use of a representative point, and the like are also possible.

Meanwhile, as illustrated in FIG. 9, when interference (interference portion E) occurs at least partially between the internally fitted protrusion 13 and the externally fitted protrusion 14, and the load-transfer key portion 17 and the key groove 18, from a positional relationship between the female joint 11 and the male joint 12, the female joint 11 and the male joint 12 cannot be joined. In this case, the interference level is high. Here, for example, the height h of the internally fitted protrusion 13 not being appropriately joined is, for example, 8 to 20 mm. The radial clearance c between the internally fitted protrusion 13 and the externally fitted protrusion 14 is -1 mm, that is, has an interference by 1 mm in the radial direction.

The shape calculation unit 211 stores, in the shape database 221, results about the clearance c derived at a plurality of positions, for example, four or eight positions set in advance, as the shape information. Note that in the female joint 11 and the male joint 12, the clearance c is derived for all the internally fitted protrusions 13, the externally fitted protrusions 14, the load-transfer key portions 17, and the key grooves 18 in the joined portion at the plurality of preset positions. Then, the minimum clearance c in the radial direction relative to the center axis is derived, and a positional relationship between the load-transfer key portion 17 and the key groove 18 is derived.

Specifically, the shape calculation unit 211 extracts, by using predetermined measurement software, a minimum value of the clearance c between the externally fitted protrusion 14 of the female joint 11 and the internally fitted protrusion 13 of the male joint 12, in each vertical cross-section (see FIG. 7B) in a radial direction from the center. Furthermore, the derived information about the clearance c may be stored in the storage unit 22 in association with a mechanical joint identification ID of the pipe type information stored in the pipe type database 222. Similarly, the shape calculation unit 211 specifically extracts, by using predetermined measurement software, values of opening width and opening depth of the key groove 18 of the male joint 12 and values of opening width and a size of the load-transfer key portion 17 of the female joint 11 in each vertical cross section (see FIG. 7B). The derived information about the values such as the opening width, opening depth, the size of the key may be stored in the storage unit 22 in association with the mechanical joint identification ID of the pipe type information stored in the pipe type database 222.

### (Joining possibility determination step)

Next, the process proceeds to Step ST414 as a clearance determination step, and the determination unit 212 of the control unit 21 reads the shape information from the shape database 221 of the storage unit 22 and determines whether the joining can be performed, according to a predetermined criterion. In other words, the determination unit 212 makes a determination on the basis of a predetermined criterion, for example, on the basis of whether the clearance c between the internally fitted protrusion 13 of the male joint 12 and the externally fitted protrusion 14 of the female joint 11 is equal to or less than a predetermined value Note that the predetermined value can be set to any value, and in the present embodiment, the predetermined value is set to, for example, 0.

### (Interference information providing step)

In Step ST414, when the determination unit 212 determines that the clearance c between the internally fitted protrusion 13 of the male joint 12 and the externally fitted protrusion 14 of the female joint 11 is equal to or less than the predetermined value, specifically, for example, equal to or less than 0 (c ≤ 0) (Step ST414: Yes), the process proceeds to Step ST418. In Step ST418, the determination unit 212 performs an interference information providing process to provide information about the interference portion E in a mechanical joint 10 to be evaluated. The determination unit 212 outputs information about rejection to which the information about the interference portion E is provided, and stores the information about rejection in the shape database 221, as the shape information. This is the end of the interference analysis process.

As above, description has been made of an example in which the acceptance or rejection is determined on the basis of whether the amount of interference between the outer surface of the male joint 12 and the inner surface of the female joint 11, caused by collapse of the roundness of a joint pipe or the like, satisfies a requirement to confirm whether the male joint 12 can be entirely inserted into the female joint 11. Note that the above example has focused on the interference level between the internally fitted protrusion 13 of the male joint 12 and the externally fitted protrusion 14 of the female joint 11, but the position where the interference is to be confirmed is not limited thereto. The position where the interference is to be confirmed may be formed into, for example, a spigot joint portion that suppresses shift in a radial direction between the female joint 11 and the male joint 12. Note that when the result is rejection at this step, processing or the like by the recess and protrusion forming devices 40 and 40A can be also performed. In this case, the clearance c can be fully enlarged to reduce the possibility of rejection of joining, but enlargement of the clearance c in a structural member or the like may cause a reduction in the yield strength or rigidity of the mechanical joint 10, and therefore, it is preferable to adjust the clearance c within an appropriate range as described above.

In Step ST414, when the determination unit 212 determines that the clearance c between the internally fitted protrusion 13 of the male joint 12 and the externally fitted protrusion 14 of the female joint 11 is larger than the predetermined value, specifically, for example, larger than 0 (c > 0) (Step ST414: No), the process proceeds to Step ST415. In other words, when the clearance c in the joined portion at the plurality of preset positions is larger than the predetermined value, and it is determined that the interference is not caused and the female joint 11 and the male joint 12 can be joined. Here, when the predetermined value is set to 0, the determination unit 212 can determine that the interference does not occur and the female joint 11 and the male joint 12 can be joined, if the clearance c is always in a positive state (c = r2 - r1 > 0). Note that the interference portion E may occur not only between the internally fitted protrusion 13 and the externally fitted protrusion 14 in the radial direction but also at a position other than the position between the internally fitted protrusion 13 and the externally fitted protrusion 14, and therefore, the same determination may be made, but in the mechanical joint 10, deformation of the internally fitted protrusion 13 and the externally fitted protrusion 14 in the radial direction is most likely to occur, and therefore, the determination unit 212 can determine that joining is possible if the clearance between the internally fitted protrusion 13 and the externally fitted protrusion 14 in the radial direction satisfies the above-described condition (c > predetermined value). Note that, this time, as a static examination, a method of examination in which it is assumed that the shape of the entire joint is rigid without being deformed by using measurement software or CAD has been adopted, but, as a dynamic examination, a method of examination in which elastic deformation of the joint due to partial minute interference as well as frictional resistance or the like are considered can also be adopted. For the dynamic examination, dynamic analysis by using FEM, a mechanism analysis, or the like can be performed to determine interference on the basis of variation in load, torque, contact, friction, or the like.

### (Positional-relationship-between-recesses grasping step)

Next, in Step ST415 as a positional-relationship-between-recesses grasping step, the determination unit 212 acquires positional relationship information about a positional relationship between a groove in which the joining screw 17b for the load-transfer key portion 17 is accommodated and the key groove 18. Thereafter, the process proceeds to Step ST416, and the determination unit 212 determines whether the positional relationship between the load-transfer key portion 17 and the key groove 18 is within an allowable range, that is, determines the magnitude of the interference level, on the basis of the positional relationship information acquired in Step ST415.

The determination unit 212 is configured to confirm the positional relationship between the load-transfer key portion 17 and the key groove 18, determine the interference level on the basis of whether the mutual positional relationship between the load-transfer key portion 17 and the key groove 18 satisfies the allowable range, and determine the acceptance or rejection. In other words, in the determination by the determination unit 212, the magnitude of the interference level is determined on the basis of whether the joining screw 17b for the load-transfer key portion 17 provided in the female joint 11 is slidable relative to the key groove 18 to a predetermined position that enables load transfer between the female joint 11 and the male joint 12. Here, it is assumed that the interference level is high when the joining screw 17b for the load-transfer key portion 17 is not slidable relative to the key groove 18 to the predetermined position, and that the interference level is low when the joining screw 17b is slidable.

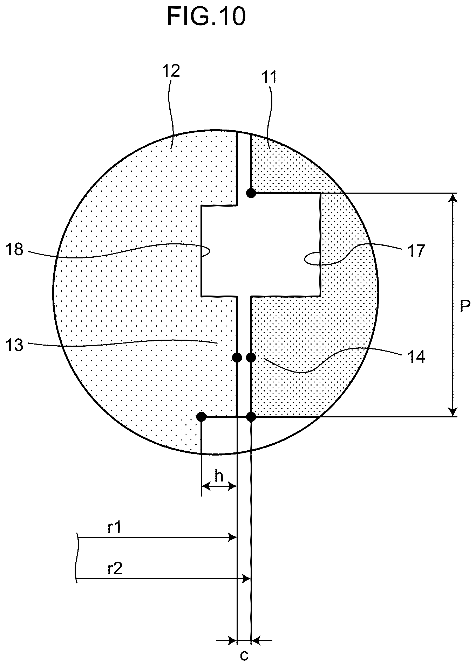

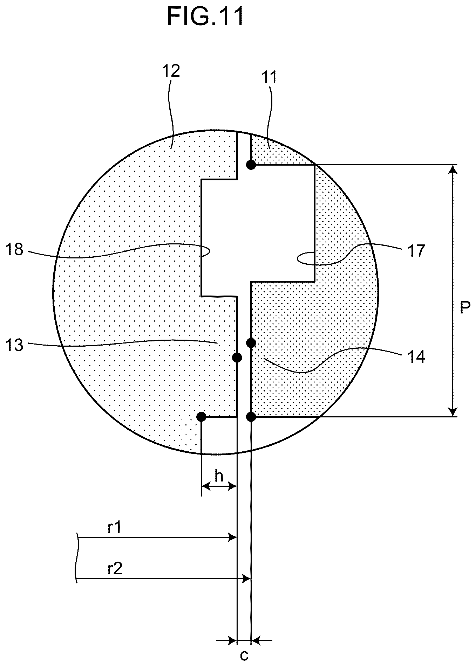

Here, a state in which the interference level is high in the positional relationship (positional relationship between recesses) between the groove that is a recess portion in which the joining screw 17b for the load-transfer key portion 17 is accommodated and the key groove 18 that is a recess portion in the male joint 12 is illustrated in FIGS. 10 and 11.

As illustrated in FIG. 10, when a pair of upper ends of the load-transfer key portion 17 in the female joint 11 and the key groove 18 in the male joint 12 at a position, from among pairs of upper ends of the load-transfer key portions 17 in the female joint 11 and upper ends of the key grooves 18 in the male joint 12, are aligned (in FIG. 10, lower end of recess and protrusion pitch P), it is assumed that the interference level is high when the upper end of another load-transfer key portion 17 in the female joint 11 is higher than the upper end of the key groove 18. In this case, the joining screw 17b (not illustrated in FIG. 10) in the load-transfer key portion 17 interferes and cannot slide into the key groove 18. On the other hand, when a pair of the upper ends of the load-transfer key portion 17 in the female joint 11 and the key groove 18 in the male joint 12 at a position, from among the pairs of the upper ends of the load-transfer key portions 17 in the female joint 11 and the upper ends of the key grooves 18 in the male joint 12, are aligned (in FIG. 10, lower end of recess and protrusion pitch P), it is assumed that the interference level is low when the upper end of another load-transfer key portion 17 in the female joint 11 is lower than the upper end of the key groove 18. In this case, the joining screw 17b (not illustrated in FIG. 10) in the load-transfer key portion 17 can slide into the key groove 18 without interference. Note that the interference level may be determined by aligning the lower ends of the load-transfer key portion 17 and the key groove 18 at a position, from among the pairs of the lower ends of the load-transfer key portions 17 and the lower ends of the key grooves 18.

In addition, as illustrated in FIG. 11, when a pair of upper ends of the load-transfer key portion 17 in the female joint 11 and the key groove 18 in the male joint 12 at a position, from among pairs of upper ends of the load-transfer key portions 17 in the female joint 11 and upper ends of the key grooves 18 in the male joint 12, are aligned (in FIG. 11, lower end of the recess and protrusion pitch P), it is assumed that the interference level is high when the upper and lower ends of another load-transfer key portion 17 in the female joint 11 are higher than the upper and lower ends of the key groove 18. In this case, the joining screw 17b (not illustrated in FIG. 11) in the load-transfer key portion 17 interferes with an end portion of the key groove 18 upon entry and cannot slide. On the other hand, when a pair of upper ends of the load-transfer key portion 17 in the female joint 11 and the key groove 18 in the male joint 12 at a position, from among pairs of upper ends of the load-transfer key portions 17 in the female joint 11 and upper ends of the key grooves 18 in the male joint 12, are aligned (in FIG. 11, lower end of the recess and protrusion pitch P), it is assumed that the interference level is low when the upper and lower ends of another load-transfer key portion 17 in the female joint 11 are accommodated between the upper and lower ends of the key groove 18. In this case, the joining screw 17b (not illustrated in FIG. 11) in the load-transfer key portion 17 can slide into the key groove 18 without interference. Note that the interference level may be determined by aligning the lower ends of the load-transfer key portion 17 and the key groove 18 at a position, from among the pairs of the lower ends of the load-transfer key portions 17 and the lower ends of the key grooves 18.

In Step ST416, when the determination unit 212 determines that the positional-relationship-between-recesses between the recess portion in which the joining screw 17b for the load-transfer key portion 17 is accommodated and the key groove 18 that is the recess portion in the male joint 12 is out of the allowable range, and that the interference level is high (Step ST416: Yes), the process proceeds to Step ST418. In Step ST418, the determination unit 212 outputs information indicating that the mechanical joint 10 to be evaluated is rejected, and stores the information about rejection in the shape database 221, as the shape information. Note that the information about rejection may include information about the positional relationship between recesses described above. This is the end of the interference analysis process. Note that the mechanical joint 10 that has been rejected may be processed and adjusted by the recess and protrusion forming device 40 or 40A, and if the requirement is satisfied, the mechanical joint 10 can also be determined an accepted product.

On the other hand, in Step ST416, when the determination unit 212 determines that the positional-relationship-between-recesses between the groove that is the recess portion in which the joining screw 17b for the load-transfer key portion 17 is accommodated and the key groove 18 that is the recess portion in the male joint 12 is within the allowable range, and that the interference level is low (Step ST416: No), the process proceeds to Step ST417. In Step ST417, the determination unit 212 outputs the information indicating that the mechanical joint 10 to be evaluated is accepted. The information about acceptance includes the information about the clearance and the information about the positional relationship between recesses, as results of the determination in Step ST414. The determination unit 212 stores the information about acceptance in the shape database 221. This is the end of the interference analysis process.

According to a clearance evaluation/shape analysis process according to an embodiment, it is determined that the mechanical joint 10 is rejected when a position where the clearance c is equal to or less than the predetermined value is found, and therefore, it is possible to facilitate the shape analysis while suppressing the time and data volume required until a rejected product in the mechanical joints 10 is found. In addition, the positional relationship (positional relationship between recesses) between the groove that is the recess portion in which the joining screw 17b for the load-transfer key portion 17 is accommodated and the key groove 18 that is the recess portion in the male joint 12 is confirmed to determine whether the joining screw 17b can enter the key groove 18, and therefore, it is possible to acquire the information about rejection before actual entry of the joining screw 17b from the screw hole 17a.

Thereafter, the process proceeds to Step ST5 illustrated in FIG. 5, and the control unit 21 outputs information about acceptance or rejection of the mechanical joint 10 to be evaluated to the input/output unit 23. Note that, in the mechanical joint 10 determined as rejection, an actual mechanical joint 10 may have a mark or the like thereon. Note that, for the mechanical joint 10 determined as rejection, it is possible to appropriately select whether to perform an adjustment process thereon which is described later or whether to dispose of the mechanical joint. This is the end of the process of evaluation of the mechanical joint.

It is possible to control the quality of the mechanical joint 10 on the basis of the mechanical joint evaluation method described above. In other words, in the quality control method for the mechanical joint 10, first, the mechanical joint 10 is manufactured by the joint manufacturing process in Step ST1. Next, the recess and protrusion shapes of the internally fitted protrusion 13 and the externally fitted protrusion 14 of the mechanical joint 10 are measured by a joint measurement process in Step ST3. Thereafter, in Step ST4, the interference analysis process is performed using the results of the evaluation obtained by the joint measurement process, and it is possible to control the quality of the mechanical joint 10, as the quality control process.

According to the evaluation method for the mechanical joint 10 according to an embodiment of the present invention described above, it is possible to confirm whether the mechanical joint 10 can be joined after completion of manufacturing the mechanical joint 10 or before completion. In addition, conventional determination has been made by actually fitting the female joint 11 and the male joint 12, but the interference between the internally fitted protrusion 13 and the externally fitted protrusion 14 can be confirmed as the clearance by using the information based on the result of evaluation, and accuracy can be ensured. In addition, the evaluation of the interference level is started from the joining completion position of the mechanical joint 10, and therefore, it is not necessary to search for the joining start position, and further, it is possible to detect the interference position early, enabling efficient starting of the evaluation of the clearance in the mechanical joint 10. Furthermore, it is possible to determine in advance whether the joining screw 17b for the load-transfer key portion 17 can enter the key groove 18, therefore enabling avoidance of a state where the female joint 11 and the male joint 12, which are fitted to each other, cannot be fixed by the load-transfer key.

Furthermore, regardless of the state of the mechanical joint, such as having an elongated length and the size, it is possible to safely and readily perform confirmation of joining in advance on a site such as a factory. A place where the evaluation method for the mechanical joint 10 according to the present embodiment is used is not limited to the factory or the like, and the method can also be used in a back yard of a construction site or the like. Specifically, for example, when there are concerns about deformation of the mechanical joint 10 due to, for example, damage of the mechanical joint 10 due to welding of an additional member, transportation, or the like, or excessive exposure to direct sunlight, on the construction site, the evaluation method enables, in the back yard of the construction site, measurement of the shapes of the male joint 12 and the female joint 11 by the measurement unit 35 and determination of joining before actual joining, and therefore, it is possible to minimize suspension of work on the construction site due to a trouble.

Although the mechanical joint 10 has been described above as an example, the present invention can also have the same effects in the following cases. For example, the internally fitted protrusion 13 and the externally fitted protrusion 14 have, but are not limited to, two steps, and may have one step or three or more steps. Furthermore, the presence or absence of the spigot joint is not particularly limited. The load-transfer key portion 17 may be provided not on the female joint 11 but on the male joint 12. Furthermore, the load-transfer key portion 17 and the key groove 18 may not have the same circular shape in the circumferential direction at an axial position, and may have a spiral shape or an elliptical shape. Furthermore, the load-transfer key portion 17 may be divided in the circumferential direction or may be inclined, or may have a ring shape extending in the circumferential direction. In addition, the female joint 11 and the male joint 12 may protrude outward from the outer peripheries of the steel pipes.

### (Mechanical joint according to first modification)

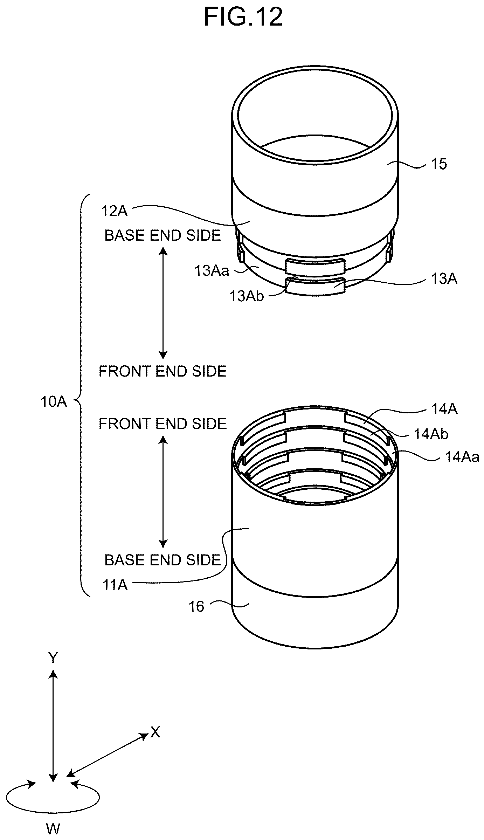

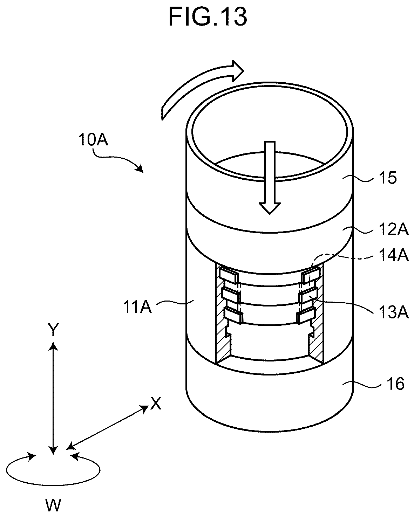

Next, a description will be made of another mechanical joint to which the mechanical joint measurement method according to an embodiment described above can be applied. FIGS. 12 and 13 are diagrams illustrating a joining start state and a joining completion state of a mechanical joint to be evaluated in the mechanical joint measurement system 1 or 1A according to the first modification of an embodiment.

### (Male joint and female joint as targets for measurement)

As illustrated in FIG. 12, for example, when a plurality of pipes is connected and driven, a mechanical joint 10A is used as a non-welded mechanical joint for connecting the plurality of pipes in an axial direction Y. The mechanical joint 10A according to the first modification is, for example, a joint for connecting the pipe 15 and the pipe 16 to each other.

The mechanical joint 10A according to the present embodiment includes a female joint 11A serving as an outer joint and a male joint 12A serving as an inner joint, which are fittable to each other. In the mechanical joint 10A, the male joint 12A is mounted to a lower end portion of the upper pipe 15 by welding or the like, and the female joint 11A is mounted to an upper end portion of the lower pipe 16 by welding or the like. Therefore, the male joint 12A and the female joint 11A are configured as a pair to face each other in the axial direction Y. In the mechanical joint 10A, a plurality of internally fitted protrusions 13A is formed on an outer periphery of the male joint 12A, and a plurality of externally fitted protrusions 14A is formed on an inner peripheral side of the female joint 11A. With this configuration, the plurality of internally fitted protrusions 13A and the plurality of externally fitted protrusions 14A form a gear joint formed on substantially the same circumference in a circumferential direction **W.** Note that the gear joint can also adopt various numbers of steps, and the number of steps is not limited.

The female joint 11A has the plurality of externally fitted protrusions 14A formed to protrude inward in a direction X perpendicular to the axis. Therefore, a plurality of externally fitted groove portions 14Aa is each formed adjacent to each of the externally fitted protrusions 14A in the circumferential direction W. In addition, a plurality of externally fitted root portions 14Ab each formed on a base end side from each of the externally fitted protrusions 14A in the axial direction Y is formed. The female joint 11A is provided with the externally fitted protrusions 14A and the externally fitted root portions 14Ab, which are alternately adjacent to each other in the axial direction Y.

In the female joint 11A, the externally fitted protrusions 14A and the externally fitted groove portions 14Aa are alternately formed in the circumferential direction W, the plurality of externally fitted protrusions 14A is arranged substantially in line in the axial direction Y and the circumferential direction W, and the plurality of externally fitted groove portions 14Aa is arranged substantially in line in the axial direction Y and the circumferential direction W. In the female joint 11A, an externally fitted front end surface is formed on a front end side in the axial direction Y, and an externally fitted extra length portion is provided on the base end side in the axial direction Y, as a portion mounted to the end portion of the lower pipe 16 by welding or the like.

The male joint 12A has the plurality of internally fitted protrusions 13A formed to protrude outward in the direction X perpendicular to the axis. Therefore, a plurality of internally fitted groove portions 13Aa is each formed adjacent to each of the internally fitted protrusions 13A in the circumferential direction W. In addition, a plurality of internally fitted root portions 13Ab each formed on a base end side from each of the internally fitted protrusions 13A in the axial direction Y is formed. In the male joint 12A, the internally fitted protrusions 13A and the internally fitted root portions 13Ab are formed alternately adjacent to each other in the axial direction Y.

In the male joint 12A, the internally fitted protrusions 13A and the internally fitted groove portions 13Aa are alternately formed in the circumferential direction W, the plurality of internally fitted protrusions 13A is arranged substantially in line in the axial direction Y and the circumferential direction W, and the plurality of internally fitted groove portions 13Aa is arranged substantially in line in the axial direction Y and the circumferential direction W. In the male joint 12A, an internally fitted front end surface is formed on a front end side in the axial direction Y, and an internally fitted extra length portion is provided on the base end side in the axial direction Y, as a portion mounted to the end portion of the upper pipe 15 by welding or the like.

As illustrated in FIG. 13, in the mechanical joint 10A, the male joint 12A and the female joint 11A are fitted to each other to connect the pipe 15 and the pipe 16 to each other. In the mechanical joint 10A, the male joint 12A mounted to the lower end of the upper pipe 15 is inserted into the female joint 11A mounted to the upper end of the lower pipe 16. At this time, in the mechanical joint 10A for steel pipe piles, protrusion heights of the internally fitted protrusion 13A and the externally fitted protrusion 14A are equal to or less than the depths of the internally fitted groove portion 13Aa and the externally fitted groove portion 14Aa in the direction X perpendicular to the axis, and therefore, the internally fitted protrusion 13A and the externally fitted protrusion 14A pass through the externally fitted groove portion 14Aa and the internally fitted groove portion 13Aa, respectively.

Thereafter, the mechanical joint 10A for the steel pipes relatively rotates the upper pipe 15 and the lower pipe 16 in the circumferential direction W around the axis, in a state where the male joint 12A is inserted into the female joint 11A. In this configuration, in the mechanical joint 10A for the steel pipes, the protrusion heights of the internally fitted protrusion 13A and the externally fitted protrusion 14A are equal to or less than the depths of the externally fitted root portion 14Ab and the internally fitted root portion 13Ab in the direction X perpendicular to the axis, and therefore, the internally fitted protrusion 13A and the externally fitted protrusion 14A are fitted to the externally fitted root portion 14Ab and the internally fitted root portion 13Ab, respectively.

In the mechanical joint 10A, in design, a length of the internally fitted protrusion 13A in the axial direction Y is set to be equal to or less than a length of the externally fitted root portion 14Ab in the axial direction Y, and a length of the externally fitted protrusion 14A in the axial direction Y is set to be equal to or less than a length of the internally fitted root portion 13Ab in the axial direction Y. In this configuration, in the mechanical joint 10A for the pipes, the internally fitted protrusion 13A and the externally fitted protrusion 14A are locked to each other in the axial direction Y, in a state where the male joint 12A is inserted into the female joint 11A and then relatively rotated in the circumferential direction W.

Materials of the pipes 15 and 16, the male joint 12A, and the female joint 11A are not particularly limited. Examples of the materials include a steel, a metal material other than the steel, concrete, resin, a combination of a plurality of materials, and the like. A material of the mechanical joint is selected according to a purpose of use and a condition of each of the pipes or the like which is described later. The present invention is particularly effective for the mechanical joint 10A for which it is difficult to perform confirmation of joining before factory shipment, due to, for example, a large diameter of 700 mm or more, a length of the pipes 15 and 16 to which the mechanical joint is connected is 5 m or more, or a heavy weight.

The joining completion position in the mechanical joint 10A illustrated in FIG. 13 is, for example, a position where the male joint 12A and the female joint 11A in the shoulder touched state reach the line indicating joining completion (e.g., eye mark), that is, a position where the anti-rotation key can be inserted, but the joining completion position is not limited thereto. For example, when there is no line indicating joining completion, which is set in advance, it is also possible to set the joining completion position with the shoulder touched state as the initial position, or to set the joining completion position according to a positional relationship based on an accessory such as a pipe. Therefore, the method of setting the center axis and the method of alignment, on the data used in the shape evaluation devices 20 and 20A described above are as in the mechanical joint 10. Although the mechanical joint 10A, which is the gear joint, needs to be rotated upon joining, an amount of rotation is equal to the width of gears only, and therefore, it can be determined that joining is allowed as long as the amount of interference in the joining completion state satisfies the requirement. In other words, the clearance c can be derived for determination, with the amount of rotation through gears as the amount of insertion, as in the embodiment described above.

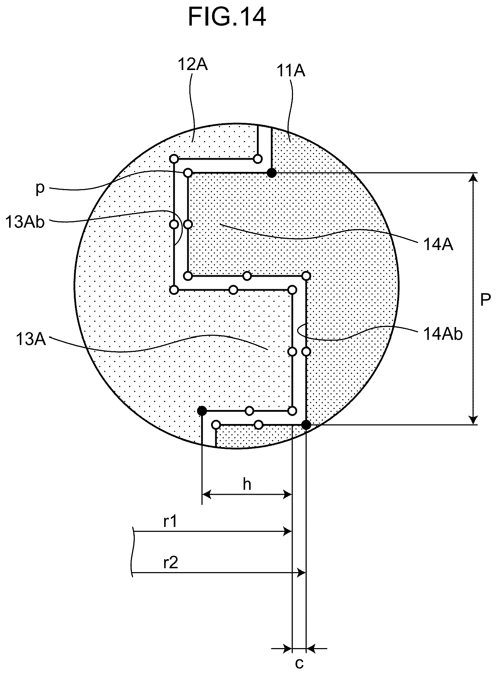

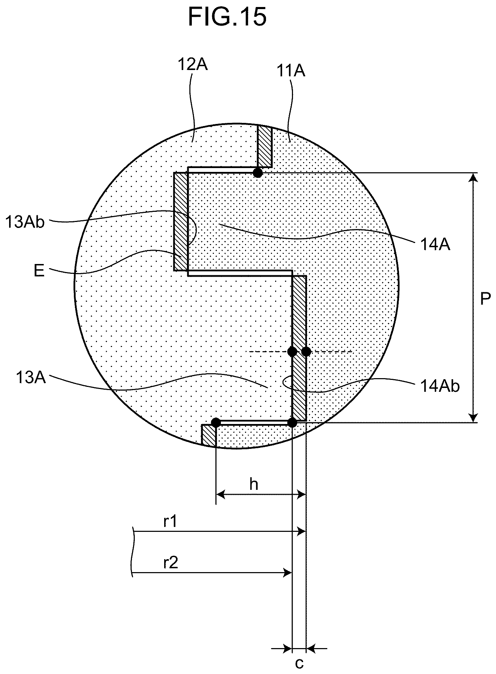

FIGS. 14 and 15 illustrate an example of a cross-section of the mechanical joint 10A converted into data, generated by the shape calculation unit 211 of each of the shape evaluation devices 20 and 20A according to an embodiment described above. FIG. 14 is an enlarged cross-sectional view of a state in which the internally fitted protrusion 13A and the externally fitted protrusion 14A of the mechanical joint 10A converted into data do not interfere with each other and the insertion of the male joint 12A into the female joint 11A and rotation through the gears are completed. FIG. 15 is an enlarged cross-sectional view illustrating a part of a state in which the interference portion E occurs due to partial interference between the internally fitted protrusion 13A and the externally fitted protrusion 14A of the mechanical joint 10A converted into data.

As illustrated in FIG. 14, when no interference occurs between the internally fitted protrusion 13A and the externally fitted root portion 14Ab and between the externally fitted protrusion 14A and the internally fitted root portion 13Ab, and the interference level is low, the female joint 11A and the male joint 12A can be joined. Note that, also in the internally fitted groove portion 13Aa and the externally fitted groove portion 14Aa, the determination processing to determine the magnitude of the interference level is similarly performed. The clearance c is defined as a radial component of the center of the male joint 12A, in a line connecting the center of the internally fitted protrusion 13A and the center of the externally fitted protrusion 14A, and the clearance c can be derived as c = r2 - r1, from the distance r1 of a plane in circumferential contact with the internally fitted protrusion 13A of the male joint 12A from a center of a diameter of the male joint 12A, and the distance r2 of the externally fitted protrusion 14 of the female joint 11 from the center of the diameter of the male joint 12.

Meanwhile, as illustrated in FIG. 15, when interference (interference portion E) occurs between the internally fitted protrusion 13A and the externally fitted root portion 14Ab and between the externally fitted protrusion 14A and the internally fitted root portion 13Ab, from a positional relationship between the female joint 11A and the male joint 12A, the female joint 11 and the male joint 12 cannot be joined. In this case, the interference level is high.

The shape calculation unit 211 stores, in the shape database 221, results about the clearance c derived at a plurality of positions, for example, four or eight positions set in advance, as the shape information. Note that in the female joint 11A and the male joint 12A, the clearance c is derived for all the internally fitted protrusions 13A, the externally fitted protrusions 14A, the internally fitted root portions 13Ab, the externally fitted root portions 14Ab, the internally fitted groove portions 13Aa, and the externally fitted groove portions 14Aa in the joined portion at the plurality of preset positions. Then, the minimum clearance c in the radial direction relative to the center is derived, and the positional relationship between the load-transfer key portion 17 and the key groove 18 is derived.

As in the shape evaluation method for the mechanical joint 10 according to an embodiment described above, the acceptance or rejection is determined, on the basis of whether the amount of interference (interference portion E) between an outer surface of the male joint 12A and an inner surface of the female joint 11A, caused by collapse of the roundness of the mechanical joint 10A in the joining completion state satisfies the requirement. As in an embodiment described above, the absence of the interference portion E is determined as acceptance due to low interference level, and the presence of the interference portion E is determined as rejection. Note that the mechanical joint 10A that has been rejected may be processed and adjusted by the recess and protrusion forming device 40 or 40A, and if the requirement is satisfied, the mechanical joint 10A can also be determined as the accepted product.

Although the mechanical joints 10 and 10A described above have an axisymmetric structure, the present invention can also be applied to a mechanical joint in which a recess into which a key or a ring is inserted is not perpendicular to an axis and has an inclined shape. A mechanical joint according to a second modification which will be described below is a mechanical joint having a recess portion into which the key or the ring is inserted, the recess portion being inclined relative to the axis.

### (Mechanical joint according to second modification)

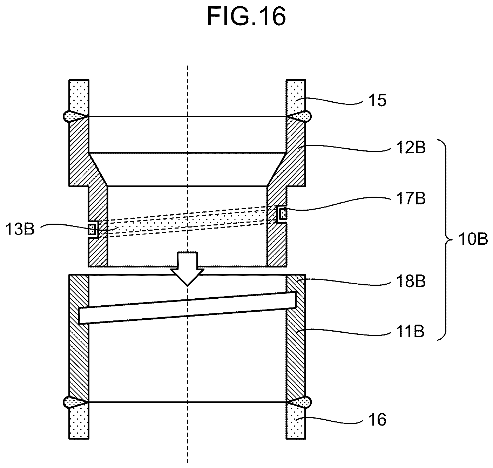

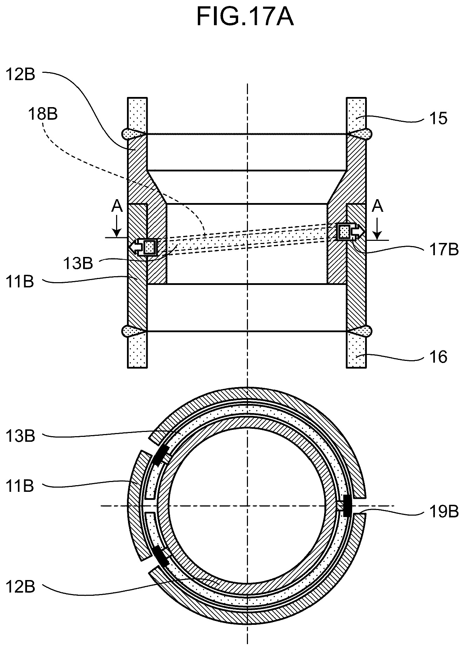

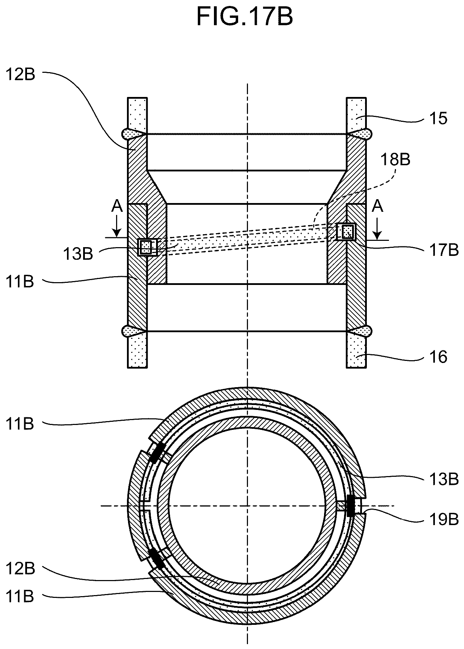

Next, a description will be made of another mechanical joint to which the mechanical joint measurement method according to an embodiment described above can be applied. FIGS. 16, 17A, and 17B are diagrams illustrating a joining start state and a joining completion state of a mechanical joint to be evaluated in the mechanical joint measurement system 1 and 1A according to the second modification of the embodiment. Note that FIG. 16 illustrates a state before joint insertion, FIG. 17A illustrates a state before fitting completion after completion of joint insertion, and FIG. 17B illustrates a state of completion of joint fitting.

As illustrated in FIG. 16, a mechanical joint 10B according to the second modification includes a pipe-shaped male joint 12B and a female joint 11B into which the male joint 12B is inserted and fitted, and the mechanical joint 10B is mounted to the end portions of the pipes 15 and 16 to join the pipes 15 and 16. A stepped portion is formed on a base end side of the male joint 12B, and as illustrated in FIG. 17A, when the male joint 12B is inserted into the female joint 11B, a front end portion of the female joint 11B abuts on the stepped portion into a fitting completion state. Here, the upper diagram of FIG. 17A is a cross-sectional view of the mechanical joint 10B as viewed in a radial direction, and the lower diagram of FIG. 17A is a cross-sectional view of the mechanical joint 10B taken along line AA as viewed in a center axis direction. The same applies to the upper diagram and the lower diagram of FIG. 17B. Note that in the second modification, the male joint 12B is also referred to as an inner joint or a PIN joint, and the female joint 11B is also referred to as an outer joint or a BOX joint.

The male joint 12B is a joint on the inside of the mechanical joint 10B. The female joint 11B is a joint on the outside of the mechanical joint 10B. Annular grooves 17B and 18B are respectively formed so as to face an outer peripheral surface of the male joint 12B and an inner peripheral surface of the female joint 11B in the fitting completion state, and are inclined relative to the axis direction of the mechanical joint 10B. Inclination angles of the annular grooves 17B and 18B are preferably set as appropriate, as long as a ring member does not rotate when a torsional load is applied. The inclination angles of the annular grooves 17B and 18B relative to the axis direction preferably have a constant angle so as to be straight when viewed from the radial direction of the mechanical joint 10B. Furthermore, the upper limit of the inclination angle of each of the annular grooves 17B and 18B relative to the axis direction is preferably 5° or less toward the axis direction of the mechanical joint 10B when the radial direction of the mechanical joint 10B is 0°. This is because when the inclination is large, a length of the joint increases and the cost increases.

The annular grooves 18B and 17B formed respectively in the female joint 11B and the male joint 12B form the annular grooves 18B and 17B including elliptical closed spaces when the joint is brought into the fitting completion state. Furthermore, the mechanical joint 10B is provided with an annular ring member 13B. The ring member 13B is configured to be stored in the annular groove 18B of the male joint 12B so as not to hinder the fitting between the male joint 12B and the female joint 11B, and be arranged across the annular groove 18B of the male joint 12B and the annular groove 17B of the female joint 11B in the annular grooves 17B and 18B in the fitting completion state.

As illustrated in the lower diagram of FIG. 17A, the ring member 13B has a spring structure having a notch at a position in the circumferential direction and expanding and contracting in the radial direction. The ring member 13B is provided with several drilled holes, and the male joint 12B is provided with several tap holes corresponding to the drilled holes, and the ring member 13B is fixed, with a diameter reduced, along the outer peripheral surface of the male joint 12B by bolts passing through the drilled holes and the tap holes. This is because the ring member 13B has a diameter larger than the outer diameter of the annular groove 17B in a non-fixed state, and the structure is used to completely fit the ring member 13B into the annular groove 17B.

In the present description, a screw is used, for a member that is combined with the drilled hole, the tap hole, a through tap hole, and a screw hole,. In particular, any male screw can be used, and is preferably selected as appropriate according to the purpose of use of the screw. Note that in the second modification, a bolt, a bolt screw, and a set screw are examples of the screw.

For example, the ring member 13B can be formed by bending a flat plate having a predetermined length. In this case, a gap formed when end portions of the flat plate are opposed to each other by bending serves as the notch. In addition to the method described above, a part of the ring-shaped member may be cut to form the notch. Furthermore, in FIG. 16, only one notch is provided in the circumferential direction of the ring member 13B, but a plurality of notches, for example, two notches may be provided. In this case, another second notch is preferably provided at a position in the vicinity of the first notch where the spring structure of the ring member 13B can be maintained. Note that one notch is most preferably used, if the spring structure of the ring member 13B is maximally utilized.

Note that the drilled holes provided in the ring member 13B are each provided with a recess portion in which the head of each of the bolts is accommodated so that the head of the bolt does not protrude from the outer peripheral surface of the ring member 13B, and the drilled hole is a stepped hole. In addition, the drilled hole is an elongated hole extending in the circumferential direction of the ring member 13B so as to accommodate expansion and contraction of the ring member 13B. Note that details of the drilled hole and the recess portion are not illustrated in the lower diagram of FIG. 17A and the lower diagram of FIG. 17B.

The bolt that fixes the ring member 13B needs to be loosened in a state where insertion of the male joint 12B into the female joint 11B is completed. In order to enable this operation, the female joint 11B is provided with a through-hole 19B at a position facing the position of each bolt in the fitting completion state, as illustrated in the lower diagram of FIG. 17A and the lower diagram of FIG. 17B.

A description will be made of a fitting operation of the mechanical joint 10B configured as described above. As illustrated in FIG. 16, in a state before the male joint 12B is inserted into the female joint 11B, the male joint 12B and the female joint 11B are aligned in direction while the ring member 13B is stored in the annular grooves 17B and 18B of the male joint 12B, and then the male joint 12B is inserted into the female joint 11B. The alignment in direction means that the annular grooves 17B and 18B of the male joint 12B and the annular grooves 17B and 18B of the female joint 11B are aligned in inclination direction, and in this state, the position of the through-hole 19B in the female joint 11B also faces the bolt of the male joint 12B in the fitting completion state.

As illustrated in FIG. 17A, insertion of the male joint 12B into the female joint 11B is completed in a state where the stepped portion of the male joint 12B and the front end of the female joint 11B are in contact with each other. In this state, the annular grooves 17B and 18B formed respectively in the male joint 12B and the female joint 11B form the annular grooves 17B and 18B including the elliptical closed spaces, and the ring member 13B stored in the annular grooves 17B and 18B of the male joint 12B is arranged to face the annular grooves 17B and 18B of the female joint 11B. Note that the determination unit 212 determines the joining after the male joint 12B is inserted into the female joint 11B and before the ring member 13B is released.

Next, as illustrated in FIG. 17B, when the bolt is loosened by inserting a tool into the through-hole 19B, the diameter of the ring member 13B is expanded by a spring force of its own, and the ring member 13B is arranged across both the annular grooves 17B and 18B and the annular grooves 17B and 18B, and the fitting is completed. Note that the ring member 13B is expanded in diameter by the spring force of its own, and is arranged in the annular grooves 17B and 18B while maintaining this state. Therefore, after the fitting is completed, the bolt is not required for the function of the joint. Therefore, even when the bolt falls out or is damaged due to vibration or the like, the function of the joint is not affected.

As illustrated in FIG. 17B, in the fitting completion state, a compressive force is mainly transmitted by contact pressure between the stepped portion of the male joint 12B and the front end portion of the female joint 11B, and a tensile force is mainly transmitted by bearing capacity of the ring member 13B. Furthermore, a torsional force is mainly transmitted by shearing of the ring member 13B, and a shearing force is mainly transmitted by a double pipe portion of the male joint 12B and the female joint 11B.

The present invention can also be applied to the mechanical joint 10B configured as described above, as long as the female joint 11B and the male joint 12B have a shape having a recess and protrusion structure, and the shape is not limited to a special joint shape.

### (Mechanical joint according to third modification)

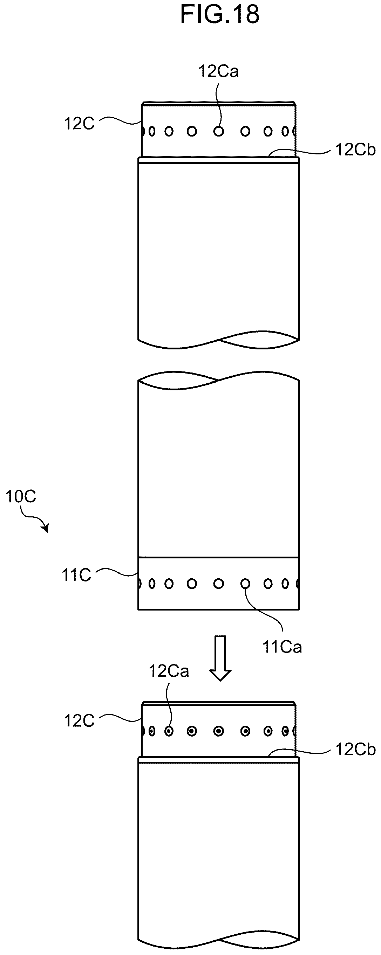

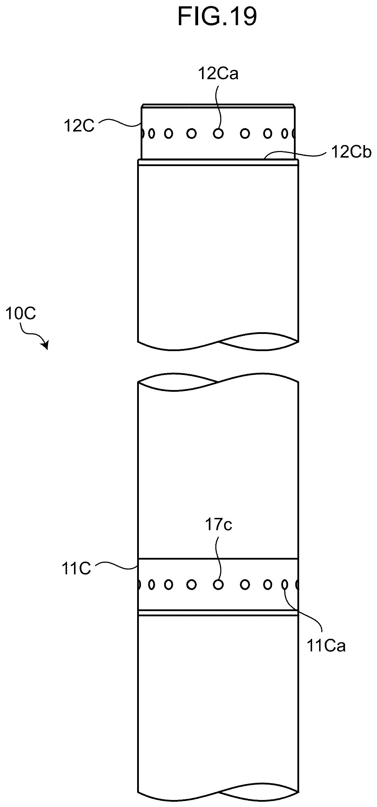

Next, a description will be made of another mechanical joint to which the mechanical joint measurement method according to an embodiment described above can be applied. FIGS. 18 and 19 are diagrams illustrating a joining start state and a joining completion state of a mechanical joint to be evaluated in the mechanical joint measurement system 1 and 1A according to the third modification of an embodiment. Note that FIG. 18 illustrates a state before joint insertion, and FIG. 19 illustrates a fitting completion state after completion of joint insertion.

As illustrated in FIG. 18, a mechanical joint 10C according to the third modification includes a female joint 11C that is an outer joint pipe and a male joint 12C that is an inner joint pipe, and is mounted to an end portion of a steel pipe to join the steel pipes. Insert holes 11Ca and 12Ca are provided in a side surface of the female joint 11C and a side surface of the male joint 12C. The insert holes 11Ca and 12Ca are arranged on a cross-section orthogonal to the longitudinal direction, at a plurality of positions separated from each other at a predetermined interval, along a circumferential direction of a cylindrical shape, and have axes intersecting at the center.

As illustrated in FIG. 19, the male joint 12C is inserted into a hollow portion of the female joint 11C up to the portion of a step 12Cb, and fitted to the female joint 11C so that the centers of the insert holes 11Ca and 12Ca are aligned, and then a joining member 17c is installed across each of the insert holes 11Ca and 12Ca so that the insert holes 11Ca and 12Ca communicate with each other. Therefore, the male joint 12C and the female joint 11C are joined. Here, for the joining member 17c, various joining members such as a pin, a screw, and a bolt corresponding to the diameters of the insert holes 11Ca and 12Ca and the plate thickness of the mechanical joint 10C can be used.

As illustrated in FIGS. 18 and 19, in the joining of the male joint 12C and the female joint 11C, in order to align the center positions of the insert holes 11Ca and 12Ca, it is necessary to align the heights in the axis direction and align the positions in the circumferential direction. In other words, when the female joint 11C and the male joint 12C are fitted, the presence or absence of contact or interference between an inner surface of the female joint 11C and an outer surface of the male joint 12C affects workability.

Therefore, in the interference analysis process according to the third modification, the shapes of the inner surface of the female joint 11C and the outer surface of the male joint 12C that may cause interference upon fitting are evaluated using, for example, the measurement terminal 30A, the measurement unit 35, and the like, in the data acquisition processing in Step ST411 illustrated in FIG. 6.

After the data acquisition processing in Step ST411 is completed, the process proceeds to Step ST412 to perform setting of the joining completion state. In the setting of the joining completion state, the center positions of the female joint 11C and the male joint 12C and the center positions of the insert holes 11Ca and 12Ca of the female joint 11C and the male joint 12C are matched each other, on the basis of the evaluation data of the shapes obtained by measurement in the data acquisition processing, and for a fitting completion position, marks such as eye marks and an appropriate number of insert holes 11Ca and 12Ca are set as targets during shoulder touching, and a state in which the target insert holes 11Ca and 12Ca have a small positional deviation is set as the joining completion state.

Next, the process proceeds to Step ST413 to perform interference analysis evaluation. In the interference analysis process, first, the joining completion state set in Step ST412 is set as the initial position. The determination unit 212 performs interference determination, on the basis of the presence or absence of surface contact in the radial direction, and on the basis of whether there is a deviation in the axis direction and a deviation in the circumferential direction that are equal to or more than a preset clearance from the joining member 17c such as a bolt to be inserted, for the positions of all the insert holes 11Ca and 12Ca. In the interference determination in the third modification, when acceptance is determined by the determination unit 212, acceptance is shown, and when acceptance is not determined by the determination unit 212, rejection is shown.

When rejection is determined by the determination unit 212, the determination result can be changed to acceptance by the following method. In other words, the shape calculation unit 211 relatively rotates the female joint 11C and the male joint 12C, and searches for a position where the interference level corresponds to acceptance. The female joint 11C and the male joint 12C are rotated to appropriately change the pair of insert holes 11Ca and 12Ca, and a position corresponding to acceptance is searched for. Alternatively, at least one of the female joint 11C and the male joint 12C is processed using the recess and protrusion forming device 40 so that the interference level corresponds to acceptance.

Although the embodiments of the present invention have been specifically described above, the present invention is not limited to the above embodiments, and various modifications based on the technical ideas of the present invention may be made. For example, the numerical values and materials mentioned in the above embodiments are merely examples, and numerical values and materials different from these may be used as necessary.

For example, in the above embodiments and modifications, the determination unit 212 determines, but is not limited to, whether the clearance c between the internally fitted protrusion 13 of the male joint 12 and the externally fitted protrusion 14 of the female joint 11 is equal to or less than the predetermined value, as the predetermined criterion, and may determine whether the clearance c is less than the predetermined value as the predetermined criterion. Similarly, as the predetermined criterion, "Yes" and "No" in Step ST414 may be interchanged, on the basis of whether the clearance c is equal to or more than the predetermined value or the clearance c is more than the predetermined value. In any of these cases, the predetermined value can be set to any value.

For example, the mechanical joint evaluation method according to the embodiment described above can be performed manually or automatically by using a high-end CAD, shape measurement software applied to a handheld 3D scanner, or the like. The control unit 21 of the shape evaluation device 20 can use a software program to perform the method automatically. This configuration makes it possible to further improve the efficiency of the mechanical joint evaluation method.

### Industrial Applicability

The present invention is suitably applied to joining of steel pipes.

### Reference Signs List

1, 1A MECHANICAL JOINT MEASUREMENT SYSTEM
2 NETWORK
10, 10A, 10B, 10C MECHANICAL JOINT
11, 11A, 11B, 11C FEMALE JOINT
11Ca, 12Ca INSERT HOLE
12, 12A, 12B, 12C MALE JOINT
12Cb STEP
13, 13A INTERNALLY FITTED PROTRUSION
13Aa INTERNALLY FITTED GROOVE PORTION
13Ab INTERNALLY FITTED ROOT PORTION
13B RING MEMBER
14, 14A EXTERNALLY FITTED PROTRUSION
14Aa EXTERNALLY FITTED GROOVE PORTION
14Ab EXTERNALLY FITTED ROOT PORTION
15, 16 PIPE
17 LOAD-TRANSFER KEY PORTION
17B, 18B ANNULAR GROOVE
17a SCREW HOLE
17b JOINING SCREW
17c JOINING MEMBER
18 KEY GROOVE
19 ANTI-ROTATION KEY
19B THROUGH-HOLE
20, 20A SHAPE EVALUATION DEVICE
21, 31, 41 CONTROL UNIT
22, 32, 42 STORAGE UNIT
23, 33, 43 INPUT/OUTPUT UNIT
24, 34, 44 COMMUNICATION UNIT
30A MEASUREMENT TERMINAL
35 MEASUREMENT UNIT
40, 40A RECESS AND PROTRUSION FORMING DEVICE
45 RECESS AND PROTRUSION FORMING UNIT
211 SHAPE CALCULATION UNIT
212 DETERMINATION UNIT
221 SHAPE DATABASE
222 PIPE TYPE DATABASE
311 MEASUREMENT CONTROL UNIT
411 PROCESSING CONTROL UNIT

## Claims

1. A shape evaluation method, the method analyzing, for a set of a mechanical joint including a male joint and a female joint corresponding to the male joint, an interference level between a recess and protrusion portion of the male joint and a recess and protrusion portion of the female joint, the method comprising:
a joining completion state setting step of setting a joining completion state in which joining of the male joint and the female joint is completed, based on data about the recess and protrusion shape of each of the male joint and the female joint; and
an interference analysis step of analyzing an interference level between the recess and protrusion portion of the male joint and the recess and protrusion portion of the female joint corresponding to the recess and protrusion portion of the male joint, in the joining completion state.

2. The shape evaluation method according to claim 1, further comprising at least one of:
an acceptance/rejection determination step of determining acceptance or rejection for a set of the mechanical joint, based on the interference level measured in the interference analysis step; and
an interference information providing step of providing, to a position determined as an interference portion based on the interference level measured in the interference analysis step, information about the interference portion.

3. A mechanical joint evaluation method comprising:
a shape measurement process of measuring, for a set of mechanical joint including a male joint and a female joint corresponding to the male joint, each of a recess and protrusion shape of the male joint and a recess and protrusion shape of the female joint; and
a shape evaluation process of analyzing an interference level for each of the sets of the mechanical joints by the shape evaluation method according to claim 1 or 2, based on data about the recess and protrusion shape measured in the shape measurement process.

4. A mechanical joint manufacturing method, the method manufacturing a set of mechanical joint including a male joint and a female joint corresponding to the male joint, the method comprising:
a joint manufacturing process of manufacturing a mechanical joint; and
a joint measurement process of executing the mechanical joint evaluation method according to claim 3, for the set of the mechanical joint including the male joint and the female joint manufactured in the joint manufacturing process.

5. A mechanical joint quality control method, the method managing quality of a set of a mechanical joint including a male joint and a female joint corresponding to the male joint, the method comprising:
a joint manufacturing process of manufacturing a mechanical joint;
a joint measurement process of measuring a recess and protrusion shape of the mechanical joint by the mechanical joint evaluation method according to claim 3, for the set of the mechanical joint manufactured in the joint manufacturing process; and
a quality control process of controlling quality of the manufactured mechanical joint by using a result obtained from the joint measurement process.

6. A shape evaluation device, the device analyzing, for a set of a mechanical joint including a male joint and a female joint corresponding to the male joint, an interference level between a recess and protrusion portion of the male joint and a recess and protrusion portion of the female joint, the device comprising
a control unit that executes:
a joining completion state setting process of setting a joining completion state in which joining of the male joint and the female joint is completed, based on data about the recess and protrusion shape of each of the male joint and the female joint; and
an interference analysis process of analyzing an interference level between the recess and protrusion portion of the male joint and the recess and protrusion portion of the female joint corresponding to the recess and protrusion portion of the male joint, in the joining completion state.

7. The shape evaluation device according to claim 6, further comprising
a communication unit,
wherein the communication unit performs, by the control unit,
at least one of: a process of acquiring data about a recess and protrusion shape of each of the male joint and the female joint; and a process of outputting information about interference level obtained in the interference analysis process.

8. A mechanical joint measurement system comprising:
a measurement unit configured to be able to measure, for a set of mechanical joint including a male joint and a female joint corresponding to the male joint, each of a recess and protrusion shape of the male joint and a recess and protrusion shape of the female joint; and
the shape evaluation device according to claim 6 or 7 that analyzes an interference level for each set of the mechanical joints, based on data about the recess and protrusion shape measured by the measurement unit.

9. A measurement terminal, the measurement terminal being configured to be able to analyze, under control of a control unit, for a set of a mechanical joint including a male joint and a female joint corresponding to the male joint, an interference level between a recess and protrusion portion of the male joint and a recess and protrusion portion of the female joint, the measurement terminal comprising:
a measurement unit that measures, under control of the control unit, a recess and protrusion shape of the male joint and a recess and protrusion shape of the female joint;
a communication unit that executes at least one of
an output process of outputting, under control of the control unit, the measured recess and protrusion shape as data, to the shape evaluation device according to claim 6, and
an acquisition process of acquiring information about the interference level for each set of the male joint and the female joint, from the shape evaluation device; and
an output unit configured to be able to output, under the control of the control unit, the acquired information in a predetermined format.

10. The measurement terminal according to claim 9, wherein
the control unit executes at least one of:
an acceptance/rejection determination process of determining acceptance or rejection of a set of the mechanical joint, based on the acquired information about the interference level and a predetermined criterion; and
an interference information providing process of providing information about the interference portion, to a position determined as an interference portion based on the acquired information about the interference level and the predetermined criterion.

11. A mechanical joint measurement system comprising:
the measurement terminal according to claim 9; and
the shape evaluation device according to claim 6 that analyzes an interference level for each set of the mechanical joint, based on data about a recess and protrusion shape measured by the measurement terminal.

12. A mechanical joint quality control method, the method managing quality of a set of a mechanical joint including a male joint and a female joint corresponding to the male joint, the method comprising:
managing quality for the set of the mechanical joint, using information about an interference level obtained from an interference analysis process executed by the control unit of the shape evaluation device according to claim 6 or 7.
